# EUROPÄISCHE PATENTSCHRIFT

(11) **EP 1 704 313 B1**
(45) Veröffentlichungstag und Bekanntmachung des Hinweises auf die Patenterteilung: **30.03.2016**
(21) Anmeldenummer: 04817390.0
(22) Anmeldetag: 28.10.2004
(51) Int. Cl.: F02C 7/143

(54) **VERFAHREN ZUM BETRIEB EINER KRAFTWERKSANLAGE**
METHOD FOR OPERATING A POWER PLANT
PROCEDE POUR FAIRE FONCTIONNER UNE CENTRALE ELECTRIQUE

(30) Priorität: 30.10.2003 CH 185603
(43) Veröffentlichungstag der Anmeldung: 27.09.2006
(73) Patentinhaber: ALSTOM Technology Ltd, 5400 Baden (CH)
(72) Erfinder: JIMENEZ, Härtel, Carlos, 81247 München (DE); SAVIC, Sasha, CH-5430 Wettingen (CH); DITTMANN, Rolf, CH-5415 Nussbaumen (CH)
(74) Vertreter: Bernotti, Andrea
(86) Internationale Anmeldenummer: PCT/EP2004/052681
(87) Internationale Veröffentlichungsnummer: WO 2005/042947

(56) Entgegenhaltungen:
- EP-A- 1 203 866
- US-A- 5 353 585
- US-A- 5 463 873

## Beschreibung

### Technisches Gebiet

Die vorliegende Erfindung betrifft ein Verfahren zum Betrieb einer Kraftwerksanlage gemäss dem Oberbegriff des Anspruchs 1, sowie eine zur Durchführung des Verfahrens besonders geeignete Kraftwerksanlage.

### Stand der Technik

Es ist im Stand der Technik beispielsweise aus der DE 25 49 790 wohlbekannt, eine Flüssigkeit in den Ansaugtrakt von Verbrennungskraftmaschinen, wie beispielsweise Gasturbogruppen, einzudüsen. Durch die Verdunstung der Flüssigkeit wird die Ansaugluft abgekühlt, und die Leistung erhöht. Der Effekt lässt sich weiter steigern, wenn der eingespritzte Flüssigkeitsmassenstrom so gross gewählt ist, dass die Ansaugluft diesen nicht mehr aufzunehmen vermag, also mit Flüssigkeit übersättigt wird, derart, dass wenigstens ein Teil der Flüssigkeit erst während der Verdichtung verdampft. Wenn also Flüssigkeitstropfen in den weitgehend adiabaten Turboverdichter einer Gasturbogruppe eindringen, so resultiert aus der Verdunstung im Verdichter eine intensive Innenkühlung, und die Leistungsaufnahme des Verdichters wird verringert, was die Netto-Leistungsabgabe der Gasturbogruppe signifikant zu erhöhen vermag. Dieses Verfahren ist unter anderem als "Overfogging" oder "Wet Compression" bekanntgeworden. Daneben wird die reine Verdunstungskühlung der Ansaugluft durch eingespritzte Flüssigkeitstropfen als "Fogging" bezeichnet.

Dem oben gesagten ist zu entnehmen, dass die Verdunstung von eingespritzter Flüssigkeit zu einer signifikanten Temperaturabsenkung stromauf des Lufteinlasses einer Kraftmaschine führen kann. Die Temperaturabsenkung ist im Wesentlichen von der luftmassenspezifisch verdunsteten Flüssigkeitsmenge abhängig. Entscheidend hierfür sind eine Vielzahl von Faktoren; einerseits wird die Verdunstung von der Grösse der eingespritzten Flüssigkeitstropfen und deren Dampfdruck bestimmt. Weiterhin ist die Verweilzeit der Tropfen, mithin also der Abstand der Eindüsungsstelle vom Lufteinlass, entscheidend. Die genannten Einflussgrössen werden häufig ausgeschaltet, indem die Tropfengrösse oder das Tropfengrössenspektrum innerhalb enger Grenzen festgelegt sind, und die Anordnung der Eindüsungsstelle so gewählt wird, dass am Lufteinlass der Kraftmaschine feuchtigkeitsgesättigte Luft vorliegt, also die maximal mögliche Abkühlung erzielt wurde. Auf diese Weise wird der Massenstrom der Kraftmaschine maximiert. Unter diesen Vorraussetzungen ist die aufgrund der Verdunstung erzielbare Abkühlung im Wesentlichen durch den Umgebungszustand der eintretenden Luft begrenzt; die Abkühlung kann maximal bis zur Sättigung der Luft erfolgen, und ist also im Wesentlichen von der Eintrittstemperatur und der relativen Luftfeuchte der eintretenden Luft abhängig: Während feuchtwarme Luft annährend keine Abkühlung durch Verdunstung erfährt, wird trockenheisse Luft sehr stark abgekühlt.

US 5,353,585 schlägt eine Kraftwerksanlage vor, gemäss jener die Zufuhr von Wärme zur Zerstäubungsflüssigkeit in einem Wärmetauscher erfolgt, welcher angeordnet ist, um die Ansaugluft zur Gasturbogruppe durch Wärmetausch mit der Zerstäubungsflüssigkeit zu kühlen. Diese Quelle offenbart die technische Lehre, die Temperatur der Ansaugluft auf die Taupunkttemperatur einzuregeln.

Im Lufteinlass von Kraftmaschinen, zum Beispiel im Verdichtereinlass einer Gasturbogruppe, kommt es aufgrund der Beschleunigung der Strömung zu einer weiteren Abkühlung der feuchten Luftströmung und gegebenenfalls der darin eingelagerten Flüssigkeitstropfen. In der Folge kann schädliche Eisbildung auftreten. Aufgrund des Beschleunigungseffektes kann auch bei Kraftmaschinen, welche keine Flüssigkeitseinspritzung aufweisen, bei ungünstigen Umgebungsbedingungen Eisbildung auftreten. Bei Kraftwerksanlagen, welche an Orten gebaut werden, an denen derartige Umgebungsbedingungen häufig vorkommen, sind daher sogenannte "Anti-Icing"-Systeme Stand der Technik. Dabei wird zum Beispiel erwärmte Luft aus einer hinteren Verdichterstufe einer Gasturbogruppe abgezapft und der Ansaugluft zugemischt. Andere bekannte Systeme erwärmen die Ansaugluft im Wärmetausch.

EP 898645 schlägt daher vor, bei Bedingungen, die zur Eisbildung führen können, der Ansaugluft Wärme und - zur Sicherstellung der Übersättigung der Ansaugluft - weitere Feuchtigkeit zuzuführen. Dafür ist es aber notwendig, dass entsprechende Mittel zur Wärmezufuhr, beispielsweise ein Anti-Icing-System vorhanden sind. Die Anordnung von Anti-Icing-Systemen ist aber kapitalintensiv, aufwändig, und ein Wärmetauschersystem im Zuströmkanal einer luftatmenden Kraftmaschine verbraucht Bauraum und verursacht Druckverluste.

US 6,216,443 schlägt vor, bei der Verwendung hilfsmedienunterstützter Zerstäuberdüsen entweder Dampf als Zerstäubungshilfmedium mitzuverwenden, oder zur Zerstäubung verwendete Luft entsprechend vorzuwärmen. US 6,216,443 schlägt weiterhin vor die Temperatur von zu zerstäubendem Wasser auf 10 bis 80°C einzustellen, um den Ort der Verdunstung zu beeinflussen. Die Anwendung dieser Lehre erfordert aber die Verwendung hilfsmedienunterstützter Zerstäuber, mit den bekannten Nachteilen.

### Darstellung der Erfindung

Hier will die Erfindung Abhilfe schaffen. Den in den Ansprüchen gekennzeichneten Erfindungen liegt die Aufgabe zugrunde, ein Verfahren und eine Kraftwerksanlage der eingangs genannten Art anzugeben, welches die Nachteile des Standes der Technik zu vermeiden vermögen. Insbesondere soll der Betriebsbereich für die Eindüsung von Flüssigkeit im Zuströmkanal einer luftatmenden Kraftmaschine erweitert werden, ohne aufwändige apparative Massnahmen vornehmen zu müssen. So soll beispielsweise vermieden werden, bei Kraftwerksanlagen, welche hinsichtlich der meteorologischen Rahmenbedingungen an sich kein Anti-Icing-System benötigen, ein solches speziell für den "Wet Compression"-Betrieb bei trockener Umgebungsluft und/oder niedriger Ansauglufttemperatur vorsehen zu müssen.

Dieses Verfahren soll gleichermassen mit der einfachen und energieeffizienten Druckzerstäubung, wobei hierunter auch Weiterbildungen wie die Druck-Drall-Zerstäubung oder die Flash-Zerstäubung zu subsummieren sind, als auch mit hilfmedienunterstützter Zerstäubung ausführbar sein.

Unter Druckzerstäubung werden in diesem Rahmen Zerstäubungsverfahren verstanden, bei denen die für die Zerstäubung notwendige Energie primär nicht über Hilfsmedien .herangeführt wird, wie dies beispielsweise bei luft-oder dampfunterstützten Zerstäubern der Fall ist, wie sie die US 6,216,443 vorschlägt, sondern bei denen die für die Zerstäubung notwendige Energie wenigstens zum überwiegenden Teil in der zu zerstäubenden Flüssigkeit selbst herangeführt wird. Beispielhaft zu nennen sind unter anderem die reine Druckzerstäubung, ebenso wie die aus WO 9967519 bekanntgewordene Flash-Zerstäubung, bei der überhitzte unter Druck stehende Flüssigkeit durch spontanes Sieden beim Düsenaustritt eine Zerstäubung bewirkt, oder die Druck-Drall-Zerstäubung, bei der der Flüssigkeit weiterhin am Austritt aus einer Zerstäuberdüse ein Drall aufgeprägt wird. Bekannt ist auch die Kombination von Flash-Zerstäubung und Druck-Drall-Zerstäubung, welche in WO 9967519 unter dem Namen Swirl-Flash-Zerstäubung bekanntgeworden ist.

Wohlverstanden ist die Erfindung aber auch in Kombination mit hilfsmedienunterstützter Zerstäubung, wie sie aus US 6,216,443 bekannt ist, vorteilhaft anwendbar.

Erfindungsgemäss wird diese Aufgabe unter Verwendung der Gesamtheit der Merkmale der Ansprüche 1 und 22 gelöst.

Kern der Erfindung ist es also, die Temperatur der zu zerstäubenden Flüssigkeit in einem geschlossenen Regelkreis zu steuern.

Dabei wird gemäss einer Ausführungsform der Erfindung die Temperatur im Zuströmkanal stromab der Zerstäubungsvorrichtung als Regelgrösse für den Regelkreis herangezogen. Dies ist in herausragender Weise geeignet, um den Betriebsbereich der Wassereindüsung auf Umgebungsbedingungen zu erweitern, in denen ansonsten mit Eisbildung im Lufteinlass der Kraftmaschine gerechnet werden müsste.

In einer weiteren Ausführungsform der Erfindung wird die Temperatur der zu zerstäubenden Flüssigkeit selbst als Regelgrösse herangezogen. Dies erweist sich besonders in Verbindung mit Flash-Zerstäubern als höchst vorteilhaft. Bei der Flash-Zerstäubung ist der Dampfdruck der zu zerstäubenden Flüssigkeit und damit deren Temperatur mit entscheidend für das erzeugte Tropfenspektrum. Es ist in diesem Zusammenhang also höchst von Vorteil, die Temperatur der zu zerstäubenden Flüssigkeit auf einen Sollwert oder innerhalb eines Sollwertintervalls einzuregeln. Je nach konkreter Anwendung und geforderter Regelgüte finden dabei stetige Regler oder unstetige Regler, insbesondere Zweipunktregler zur Einregelung zwischen einer Temperaturobergrenze und einer Temperaturuntergrenze, Verwendung. Bei der Flash-Zerstäubung werden dabei Temperaturen oberhalb der Siedetemperatur der Flüssigkeit bei Umgebungsdruck eingestellt, also im Allgemeinen 100°C und deutlich mehr. Typische Zustandsgrössen der Zerstäubungsflüssigkeit wären im Falle von Wasser ein Temperaturbereich von 140°C bis 250°C bei einem Druck von rund 150 bar. Bei der Regelung der Temperatur der Zerstäubungsflüssigkeit ist es weiterhin von Vorteil, auch die Temperatur im Zuströmkanal stromab der Zerstäubungsvorrichtung zu messen, und diese als Regelgrösse für eine Grenzwertregelung heranzuziehen, dergestalt, dass die Flüssigkeitseindüsung beim Überschreiten eines zulässigen Maximalwertes oder beim Unterschreiten eines zulässigen Minimalwertes aus Sicherheitsgründen ausser Betrieb genommen wird.

Gemäss der ersten Verfahrensvariante wird eine Temperatur der feuchten Luft oder des Luft-Tropfen-Gemisches im Zuströmkanal gemessen. Dabei wird die Messstelle hinreichend weit stromab der Zerstäubungsvorrichtung gewählt, so, dass die Verdunstung der Tropfen und die damit verbundene Abkühlung möglichst abgeschlossen ist. Eine bevorzugte Anordnung einer Temperaturmessstelle ist im Wesentlichen unmittelbar stromauf des Lufteinlasses der Kraftmaschine.

Gemäss einer ersten Ausführungsform dieser Verfahrensvariante wird die im Zuströmkanal gemessene Temperatur auf einen Sollwert oder innerhalb eines Sollwertintervalls eingeregelt. Wenn die gemessene Temperatur den Sollwert oder einen unteren Schwellenwert unterschreitet, wird die Temperatur der Zerstäubungsflüssigkeit erhöht. Umgekehrt, wenn die gemessene Temperatur den Sollwert oder einen unteren Schwellenwert überschreitet, wird die Temperatur der Zerstäubungsflüssigkeit vermindert.

Gemäss einer zweiten Ausführungsform wird die Temperaturregelung als Grenzwertregelung betrieben. Beim Erreichen eines unteren Grenzwertes der im Zuströmkanal gemessenen Temperatur, bei der beispielsweise die Eisbildung nicht mehr ausgeschlossen werden kann, wird die Temperatur der Zerstäubungsflüssigkeit erhöht.

In beiden Ausführungsformen ist es höchst vorteilhaft, die Temperatur der Zerstäubungsflüssigkeit weiterhin zu messen, und diese auf einen oberen Grenzwert zu begrenzen, der beispielsweise um eine Sicherheitsmarge unterhalb der Siedetemperatur der Zerstäubungsflüssigkeit bei Umgebungsdruck liegt. Es wird damit ein Sieden der Flüssigkeit beim Austritt aus der Zerstäubungsvorrichtung vermieden. Wenn die Einspritzdüsen der Zerstäubungsvorrichtung nicht besonders für die Flash-Zerstäubung konzipiert sind, können ansonsten schwerwiegende Erosions- und Kavitationsschäden resultieren, die auf diese Weise vermieden werden. Es ist weiterhin von Vorteil, wenn gleichzeitig der obere Grenzwert der Temperatur der Zerstäubungsflüssigkeit und der untere Grenzwert der Temperatur im Zuströmkanal erreicht wurde, die Flüssigkeitseindüsung vollständig ausser Betrieb zu nehmen.

Gemäss der voranstehend beschriebenen Verfahren wird die Temperatur der Zerstäubungsflüssigkeit unter anderem dazu verwendet, die Temperatur im Zuströmkanal anzuheben. Eine absolute Temperaturerhöhung der Luft erfordert dabei eine sehr hohe Temperaturdifferenz der Zerstäubungsflüssigkeit gegenüber der Luft, und einen sehr hohen Overspray-Anteil der eingedüsten Flüssigkeit; bei Wasser muss aufgrund der hohen Verdampfungsenthalpie ein erheblich grösserer Massenstrom unverdampft bleiben, als verdampft. Es lässt sich leicht abschätzen, dass, wenn die Temperatur von eingedüstem Wasser um rund 50°C über dem der zuströmenden Luft liegt, deutlich weniger als 10% des gesamten eingedüsten Massenstroms verdampfen dürfen, um überhaupt eine absolute Temperaturerhöhung der Luft zu erreichen. Auf der anderen Seite wird, unter den oben genannten Voraussetzungen, und bei 1% unverdampftem Wasser auf die Luftmenge bezogen, die Temperatur des Gemisches überschlägig um 1,5°C erhöht, das heisst die Temperaturabsenkung durch die Verdunstung um rund 1,5°C vermindert, wodurch der Betriebsbereich für einen vereisungsfreien High-Fogging-Betrieb eben doch erheblich erweitert wird.

Ebenso ist es selbstverständlich auch möglich, durch Abkühlen der Zerstäubungsflüssigkeit die Temperatur im Zuströmkanal innerhalb gewisser thermodynamischer Grenzen weiter abzusenken, als dies durch den reinen Verdunstungseffekt möglich wäre. Im Interesse von Wirkungsgrad- und Leistungswerten ist es somit möglich, die Temperatur im Zuströmkanal auf einen möglichst knapp oberhalb der Eisbildungstemperatur liegenden Wert einzustellen.

Es ist auch von Vorteil, wenn die Temperatur im Zuströmkanal einen oberen Schwellenwert erreicht, die Temperatur der Zerstäubungsflüssigkeit abzusenken. Insbesondere Turboverdichter weisen häufig eine maximal zulässige Zuströmtemperatur auf, die nicht überschritten werden darf; abgesehen von diesem Aspekt verschlechtern zu hohe Anströmtemperaturen wie erwähnt die thermodynamischen Kennwerte einer Kraftwerksanlage signifikant.

Bei einer Absenkung der Temperatur der Zerstäubungsflüssigkeit ist darauf zu achten, dass diese nicht so weit heruntergekühlt wird, dass Eisbildung in den Leitungen für die Zerstäubungsflüssigkeit einsetzt. In dieser Hinsicht soll die Temperatur der Zerstäubungsflüssigkeit nach unten auf einen Mindestwert begrenzt werden. Der Mindestwert kann durch die Zudosierung eines geeigneten Frostschutzadditivs deutlich nach unten abgesenkt werden. Wenn dieser Mindestwert dennoch unterschritten wird, und gleichzeitig die Temperatur im Zuströmkanal noch oberhalb eines Grenzwertes liegt, sind entsprechende Massnahmen zu ergreifen.

Eine Veränderung der Temperatur der Zerstäubungsflüssigkeit kann auf unterschiedliche Wege erreicht werden. Gemäss einer Ausführungsform wird wenigstens ein Teil der Zerstäubungsflüssigkeit vorgängig der Eindüsung in den Zuströmkanal durch eine Wärmezuführvorrichtung geleitet. Gemäss einer Ausführungsform wird die Wärmezufuhr in der Wärmezuführvorrichtung gesteuert. Auf der anderen Seite erweist es sich häufig als einfacher und mit einer besseren Regeldyhamik realisierbar, wenn ein zweiter Teilstrom in einer Bypassleitung um die Wärmezuführvorrichtung geleitet wird, und die Teilströme vorgängig der Zerstäubung wieder zusammengeführt werden, wobei wenigstens einer der Teilströme variabel gesteuert wird, dergestalt, dass das Verhältnis des vorgewärmten zum nicht vorgewärmten Massenstrom variiert. Dabei wird, falls die Temperatur der Zerstäubungsflüssigkeit gemessen wird, diese bevorzugt stromab der Stelle der Zusammenführung der Teilströme gemessen. In einer Ausführungsform wird der durch die Wärmezuführvorrichtung geleitete Teilstrom verdampft, und in einem Mischvorwärmer mit dem Bypasstrom zusammengeführt. Dies ermöglicht es, den durch die Wärmezuführvorrichtung geleiteten Teilstrom klein zu halten. Es ist weiterhin vorteilhaft, wenn sich der durch die Wärmezuführvorrichtung geleitete Teilstrom schon vor der Einleitung in die Wärmezuführvorrichtung auf einem Druck befindet, der wenigstens dem Zerstäubungsvordruck entspricht.

Obschon es prinzipiell möglich ist, eine externe Wärmequelle zur Aufheizung des ersten Teilstroms zu verwenden, wird mit Vorteil Abwärme aus der Kraftmaschine selbst zur Aufheizung des ersten Teilstroms verwendet, indem die Wärmezuführvorrichtung beispielsweise als Abgaswärmetauscher ausgeführt ist.

Eine Ausführungsform des erfindungsgemässen Verfahrens umfasst den Schritt, die Zerstäubungsflüssigkeit vorgängig der Eindüsung in den Zuströmkanal durch einen Kühler zu leiten, und die Kühlungsleistung des Kühlers zu steuern. Bevorzugt umfasst dieses auch, die Temperatur der Zerstäubungsflüssigkeit stromab des Kühlers zu messen, und bei drohender Eisbildung der Zerstäubungsflüssigkeit entsprechende Gegenmassnahmen zu ergreifen, insbesondere die Kühlleistung zu vermindern oder Frostschutzadditive zuzufügen.

Weitere vorteilhafte Varianten des erfindungsgemässen Verfahrens und eine zur Ausführung des Verfahrens vorteilhaft anzuwendende Kraftwerksanlage sind in den weiteren Ansprüchen und den Ausführungsbeispielen beschrieben.

### Kurze Beschreibung der Zeichnung

Die Erfindung wird nachfolgend anhand von in der Zeichnung illustrierten Ausführungsbeispielen näher erläutert. Im einzelnen zeigen:
Figur 1 eine erste Ausführungsform der Erfindung;
Figur 2 ein Detail der Zerstäubungsvorrichtung;
Figuren 3 und 4 Ausführungsformen der Erfindung unter beispielhafter Verwendung von Flash-Zerstäubern;
Figuren 5 bis 8 weitere alternative Ausführungsformen der Erfindung in Kombianlagen

Für das Verständnis der Erfindung nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

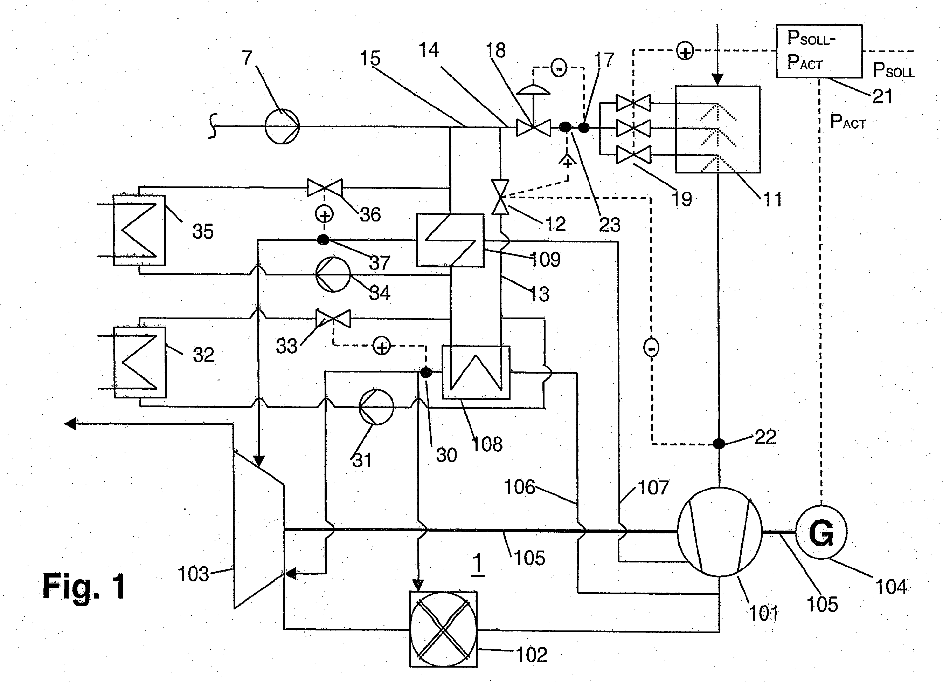

In Figur 1 ist eine Gasturbogruppe dargestellt, welche auf an sich bekannte Weise einen Verdichter 101 eine Brennkammer 102, eine Turbine 103, sowie einen Generator 104 umfasst. Die Turbine treibt über eine Welle 105 den Verdichter und den Generator an. Die dargestellte Gasturbogruppe weist weiterhin eine stromauf des Verdichtereinlasses angeordnete Einspritz- und Zerstäubungsvorrichtung 11 für eine Flüssigkeit, insbesondere Wasser, auf. dort eingedüste Flüssigkeit vermag auf zweierlei Weise die Leistung und den Wirkungsgrad der Gasturbogruppe zu erhöhen: Einerseits wird ein Teil der als Tröpfchennebel eingedüsten Flüssigkeit noch im Ansaugkanal verdunstet, wodurch die Verdichteransaugluft gekühlt wird, woraus eine Erhöhung der Dichte der Ansaugluft und des geförderten Massenstroms resultiert. Darüber hinaus in den Verdichter eindringende Flüssigkeitstropfen sorgen weiterhin für eine intensive Innenkühlung im Verdichter, der in der Folge weniger Leistung aufnimmt, so, dass mehr von der Turbinenleistung für den Antrieb des Generators zur Verfügung steht. Eine hinreichend feine Zerstäubung der Flüssigkeit in der Zerstäubungsvorrichtung 11 mit bevorzugt zu verwendenden Druckzerstäuberdüsen, wobei Tropfengrössen unter 50 µm anzustreben sind, erfordert einen hohen Zerstäubungs-Vordruck, der typischerweise im Bereich von rund 30 bis 150 bar, insbesondere 100 bis 150 bar, liegt. Besonders dann, wenn die Tropfen in den Verdichter eindringen sollen, wird stark gereinigtes demineralisiertes Wasser benötigt, um Ablagerungen auf den Verdichterschaufeln zu vermeiden. Eine Pumpe 7 fördert den unter Druck stehenden demineralisierten Flüssigkeitsmassenstrom über die Zuströmleitung 14 zur Zerstäubungsvorrichtung 11.

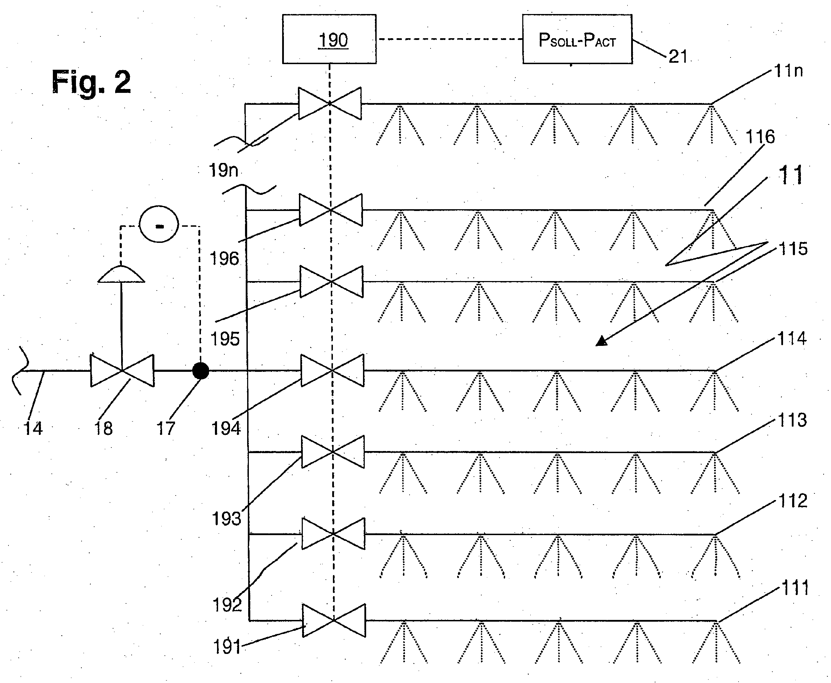

Zur weiteren Erläuterung der Stellelemente 18 und 19 sowie der Druckmessstelle 17 wird Figur 2 herangezogen. Die Einspritzvorrichtung 11 umfasst eine Mehrzahl von Düsenrohren 111 bis 11n. Diese werden über Absperrorgane 191 bis 19n selektiv zu- und abgeschaltet. Jedes Düsenrohr 111 bis 11n trägt eine Anzahl nicht einzeln dargestellter, dem Fachmann aber geläufiger Zerstäuberdüsen. Im Falle von Druckzerstäuberdüsen ist die Feinheit des erzeugten Flüssigkeitsnebels massgeblich vom Zerstäubungsvordruck abhängig. In der Leitung 14 ist daher ein Druckregelventil 18 angeordnet. Dieses öffnet und schliesst in Abhängigkeit von einem an der Druckmessstelle 17 bestimmten Druck, um diesen konstant zu halten. Der Flüssigkeitsmassenstrom wird sodann von den freien Strömungsquerschnitten, also der Anzahl der mit Flüssigkeit beaufschlagten Düsenrohre, massgeblich bestimmt. Ein Funktionsblock 21 erfasst die Ist-Leistung P_{ACT} des Generators und einen Leistungssollwert P_{Soll} und bildet daraus die Soll-Istwert-Abweichung P_{Soll} - P_{ACT}. Die Soll-Istwert-Abweichung wird an eine Steuereinheit 190 weitergeleitet. Bei einer positiven Abweichung wird selektiv wenigstens eines der Absperrorgane 191, 192, ..., 19n geöffnet. Damit wird ein Düsenrohr zusätzlich mit Flüssigkeit beaufschlagt, und bei gleichbleibendem Vordruck der eingedüste Flüssigkeitsmassenstrom erhöht.

Im Rückgriff auf die Figur 1 ist also das Stellorgan 18 dafür vorgesehen, den Zerstäubungsvordruck konstant zu halten, oder wenigstens innerhalb eines Sollwertbereiches zu halten. Das Stellorgan 19, vorliegend also eine Ventilgruppe, steuert den Massenstrom der einzudüsenden Flüssigkeit. Auf die vorliegend dargestellte Art sind die Steuerung des Massenstroms und des Flüssigkeitsvordrucks aufs Vorteilhafteste voneinander entkoppelt. An einer stromauf des Verdichters 101 und stromab der Zerstäubungsvorrichtung 11 gelegenen Temperaturmessstelle 22 wird eine Temperatur der feuchten Luft oder des Luft-Tropfen-Gemisches im Zuströmkanal stromauf des Verdichtereinlasses gemessen. Innerhalb gewisser thermodynamischer Grenzen ist es möglich, durch eine Variation der Temperatur der Zerstäubungsflüssigkeit die Temperatur an der Messstelle 22 zu steuern oder zu regeln. Es wäre selbstverständlich möglich, den gesamten zu zerstäubenden Flüssigkeitsmassenstrom durch eine Wärmezuführvorrichtung zu leiten, und die Wärmezufuhr in dieser Wärmezuführvorrichtung zu steuern. Dieses wird jedoch als nicht vorteilhaft erachtet, weil eine derartige Regelung der Wärmezufuhr unter anderem ein schlechtes dynamisches Verhalten mit sich bringt. Weiterhin wäre es selbstverständlich im Rahmen der Erfindung auch möglich, den Wärmetauscher für die Zerstäubungsflüssigkeit mit einem externen Wärmeerzeuger zu koppeln. Auch dies wird nicht als vorteilhaft erachtet, weil dies beispielsweise zusätzlichen Brennstoff benötigt, und eine Kraftmaschine normalerweise hinreichend viel Abwärme auf geeignetem Temperaturniveau zur Verfügung stellt. Zu bevorzugen ist daher, eine Wärmezuführvorrichtung für einen Teilstrom der Zerstäubungsflüssigkeit als Wärmetauscher auszuführen, der beispielsweise im Abgasstrom einer Wärmekraftmaschine angeordnet ist, oder mit Kühlaggregaten in thermischer Verbindung steht. So kann der Wärmetauscher ohne Weiteres im Kühlkreislauf eines Dieselmotors angeordnet sein, oder Wärme aus Schmierölkühlern aufnehmen, oder, wie nachfolgend dargelegt, mit Kühlluftkühlern einer Gasturbogruppe verbunden sein. Obschon weitere Ausführungsformen, insbesondere diejenigen, welche als weniger vorteilhaft erachtet werden, nicht explizit als Ausführungsbeispiele dargelegt sind, eröffnen sich diese dem Fachmann im Lichte dieser Beschreibung doch ohne weiteres und sind im Rahmen der offenbarten Erfindung enthalten.
In der Figur 1 ist das Kühlsystem der dargestellten Gasturbogruppe 1 expliziert. Die dargestellte Gasturbogruppe weist ein zweistufiges Kühlluftsystem auf. Ein Hochdruck-Kühlluftpfad 106 zweigt stromab des Verdichters 101 aus dem Strömungsweg der komprimierten Luft ab und führt Luft auf Brennkammer-Druckniveau. Ein Niederdruck-Kühlluftpfad 107 zweigt innerhalb des Verdichters ab, und führt Kühlluft eines niedrigeren Druckniveaus. Mit der Hochdruck-Kühlluft werden die Brennkammer 102 und ein erster Teil der Turbine 103 gekühlt; die Niederdruck-Kühlluft strömt in die Turbine stromab einer ersten Entspannungsstrecke. Derartige mehrstufige Kühlluftsysteme sind zwar sehr aufwändig, finden aber aus Gründen der notwendigen verlustbehafteten Kühlluft-Drosselung bei Gasturbogruppen mit hohen Druckverhältnissen Anwendung. Sehr vorteilhaft findet dies bei Gasturbogruppen mit sequentieller Verbrennung, wie sie aus EP 620362 bekannt sind, Anwendung; dort werden die erste Brennkammer und die Hochdruckturbine mit der Hochdruck-Kühlluft gekühlt, während die zweite Brennkammer und die Niederdruck-Turbine mit der Niederdruck-Kühlluft gekühlt werden. Zur Verbesserung der Kühleffektivität umfassen beide Kühlluftpfade Kühlluftkühler 108 und 109, in denen Wärme aus der Kühlluft abgeführt wird. Die Temperatur der dem Hochtemperatur-Kühlluftkühler zuströmenden Kühlluft liegt bei modernen Gasturbogruppen unter Vollastbedingungen ohne weiteres im Bereich von über 400°C bis deutlich über 500°C, was die nutzbaren kalorischen Potenziale verdeutlicht. Ein Teilstrom der von der Pumpe 7 geförderten Flüssigkeit wird in Richtung steigender

Temperatur zunächst durch den Niederdruck-Kühlluftkühler 109 und dann durch den Hochdruck-Kühlluftkühler 108 geleitet, und nimmt dabei Wärme auf. Die Kühlluftkühler sind im Strömungsweg der Flüssigkeit stromab der Pumpe 7 angeordnet; der Flüssigkeitsdruck beträgt an dieser Stelle typischerweise rund 30 bis weit über 100 bar, insbesondere 100 bis 150 bar. Daher kann eine grosse Wärmemenge zugeführt werden, ohne dass es zu einem Sieden der Flüssigkeit käme, was den Aufbau der Wärmetauscherapparate 108 und 109 vereinfacht. Die erwärmte Flüssigkeit strömt über eine Leitung 13 mit einem Stellorgan 12 zu einer gemeinsamen Zuführleitung 14. Dabei erfolgt eine Vermischung mit über eine Bypassleitung 15 herangeführten nichterwärmtem Fluid. In der dargestellten Ausführungsform sind geeignete Massnahmen zu treffen, damit die Flüssigkeit in dem Strömungspfad 13 nicht siedet; gleichwohl ist leicht nachvollziehbar, dass an der Stelle der Zusammenführung des Strömungspfades 13 und der Bypassleitung 15 ein Mischvorwärmer angeordnet sein kann, derart, dass der Wärmetauscher 108 als Verdampfer ausgeführt wäre, und in der Leitung 13 Heizdampf zu der über die Bypassleitung geführten Flüssigkeit geleitet würde. Im Zuströmkanal der Gasturbogruppe, eine möglichst geringe Strecke stromauf des Lufteinlasses des Verdichters 101, ist eine Temperaturmessstelle 22 angeordnet. Die dort gemessene Temperatur dient als Regelgrösse für einen Regelkreis. Die Stellgrösse des Regelkreises ist die Stellung des Stellorgans 12. Wenn die gemessene Temperatur steigt, wird das Stellorgan 12 geschlossen und der Anteil erwärmter Flüssigkeit verringert, und wenn die gemessene Temperatur sinkt, wird das Stellorgan geöffnet und der Anteil erwärmter Flüssigkeit erhöht. Daraus resultieren Temperaturveränderungen der Temperatur der Zerstäubungsflüssigkeit, die in der Zerstäubungsvorrichtung 11 in den Zuströmkanal eingedüst wird, und damit wird die Temperatur im Zuströmkanal beeinflusst. Weiterhin ist stromab der Zusammenführung der Leitung 13 für die erwärmte Flüssigkeit und der Bypassleitung 15 eine Temperaturmessstelle 23 zur Messung der Temperatur der Zerstäubungsflüssigkeit angeordnet. Wenn diese einen bestimmten oberen Grenzwert überschreitet, wird das Stellorgan 12 geschlossen. Damit wird vermieden, dass die Zerstäubungsflüssigkeit eine Temperatur erreicht, bei welcher beim Entspannen am Düsenaustritt Sieden auftritt, was andernfalls zu schwerwiegenden Schäden an den Einspritzdüsen führen würde, sofern diese nicht speziell für eine Flash-Zerstäubung vorgesehen sind. Dementsprechend variiert der über die Leitung 13 durch die Kühlluftkühler 108 und 109 durchgesetzte Flüssigkeitsmassenstrom sehr stark, derart, dass die notwendige Wärmeabfuhr in den Kühlluftkühlern nicht immer gewährleistet werden kann. Daher sind in Verbindung mit den Kühlluftkühlern 108, 109 regelbare Kühlmittel-Rezirkulationsschleifen angeordnet, welche im Flüssigkeits-Strömungsweg stromab jedes Kühlluftkühlers abzweigen. Zirkulationspumpen 31 und 34 fördern Flüssigkeit zu Kühlern 32 und 35. Die dort abgekühlte Flüssigkeit wird stromauf der Kühler 108 und 109 wieder in den Flüssigkeitsströmungsweg zurückgeführt. In den Rezirkulationsschleifen sind Stellorgane 33 und 36 angeordnet, deren Öffnung in Abhängigkeit von an Messstellen 30 und 37 gemessenen Temperaturen der abgekühlten Kühlluft gesteuert wird. Wenn die Temperatur der Kühlluft stromab eines Kühlers steigt, wird das Stellorgan der jeweiligen Rezirkulationsschleife geöffnet, worauf der rezirkulierte Massenstrom steigt und die Temperatur sinkt. Auf diese Weise kann, unabhängig vom Zerstäubungsflüssigkeits-Massenstrom in der Leitung 13, die Kühllufttemperatur auf einen Sollwert eingeregelt werden; Wärme, welche die Zerstäubungsflüssigkeit nicht abführt, wird in den Kühlern 32 und 35 abgeführt. Die in den Kühlern 32 und 35 anfallende Wärme kann in einem Kühlturm abgeführt, oder auf sonst nicht erfindungsrelevante Weise genutzt werden, beispielsweise zur wirkungsgradsteigernden Brennstoffvorwärmung.

In den folgenden Darstellungen ist das Kühlluftsystem der Gasturbogruppe nicht expliziert.

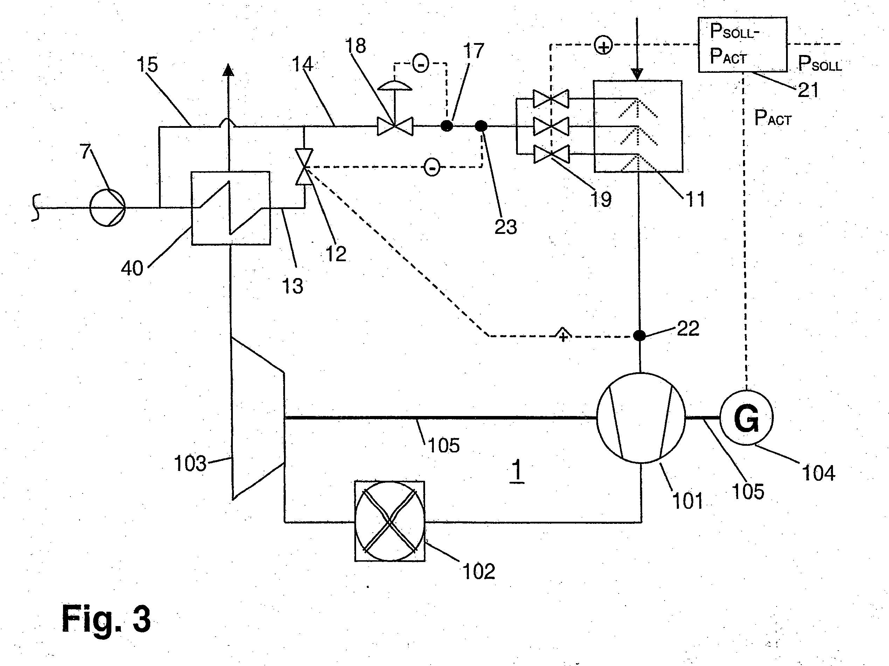

Eine zweite erfindungsgemäss betriebene Kraftwerksanlage ist in Figur 3 dargestellt. Die Gasturbogruppe 1 ist in Verbindung mit Figur 1 beschrieben. Die Zerstäubungsvorrichtung 11 wird vorliegend mit Flash-Zerstäubung betrieben. Das heisst, die Zerstäubungsflüssigkeit tritt mit einer Temperatur oberhalb ihres Siedepunktes bei Umgebungstemperatur aus den Zerstäuberdüsen aus. Die Temperatur von Wasser beträgt hier beispielsweise rund 120°C bis 300°C, insbesondere 150°C bis 200°C. Aufgrund der Expansion am Düsenaustritt setzt spontanes Sieden der Flüssigkeit ein und die am Düsenaustritt erzeugten Primärtropfen zerplatzen in kleine Fragmente. Die Flash-Zerstäubung ist in WO 9967519 beschrieben worden. Für die erzeugten Tropfengössen sind demnach der Zerstäubung-Vordruck und die Temperatur der Zerstäubungsflüssigkeit massgeblich. Die einzudüsende Flüssigkeit wird von der Pumpe 7 durch einen Abgaswärmetauscher 40 gefördert und im Wärmetausch mit dem Abgas der Gasturbogruppe erwärmt. Die Flüssigkeit strömt aus dem Abgaswärmetauscher 40 und die Leitung 13 mit dem Stellorgan 12 sowie die Druckregeleinheit 17, 18 zu der in Verbindung mit Figur 2 beschriebenen Zerstäubungsvorrichtung. In Abhängigkeit von dem den Abgaswärmetauscher 40 durchströmenden Flüssigkeitsmassenstrom und dem Lastzustand der Gasturbogruppe muss mit starken Schwankungen der Temperatur der aus dem Abgaswärmetauscher 40 austretenden Flüssigkeit gerechnet werden. Daher wird der Wärmetauscher 40 von einer Bypassleitung 15 umgangen. Stromauf des Druckregelventils 18 münden die Leitung 13 und die Bypassleitung 15 in einer gemeinsamen Zuführleitung. Mittels einer Temperaturmessstelle 23 wird die Temperatur des Gemisches von erwärmtem und nichterwärmtem Fluid gemessen. Mit diesem Messwert als Regelgrösse wird das Stellorgan 12 gesteuert, und damit werden die Massenstromanteile des vorgewärmten und des nichtvorgewärmten Fluides verändert. Wenn die an der Messstelle 23 gemessene Temperatur der Zerstäubungsflüssigkeit steigt, wird das Stellorgan 12 geschlossen. Der erwärmte Massenstromanteil sinkt, und in der Folge auch die Temperatur der Zerstäubungsflüssigkeit. Umgekehrt wird das Stellorgan geöffnet, wenn die gemessene Temperatur sinkt. Auf diese Weise kann die Temperatur auf einfache Weise auf einen Sollwert eingeregelt werden, wobei hierzu selbstverständlich auf nicht dargestellte, dem Fachmann aber zwanglos geläufige Weise ein Soll-Istwert-Vergleich der Temperatur gehört. Ebenso kann auch eine Zweipunktregelung zur Einstellung der Temperatur innerhalb eines Sollwert-Intervalls implementiert sein. Eine Erhöhung der Temperatur der Zerstäubungsflüssigkeit führt selbstverständlich auch zu einer Temperaturzunahme im Zuströmkanal des Verdichters 101. Diese Temperatur ist nach oben auf einen zulässigen Maximalwert begrenzt. Daher wird die Temperatur an der Messstelle 22 gemessen, und als Regelgrösse einer Grenzregelung verwendet. Wenn der zulässige Temperatur-Maximalwert erreicht oder überschritten wird, wird im Sinne einer Sicherheitsschaltung das Stellorgan 12 geschlossen, und gegebenenfalls weitere Massnahmen eingeleitet.

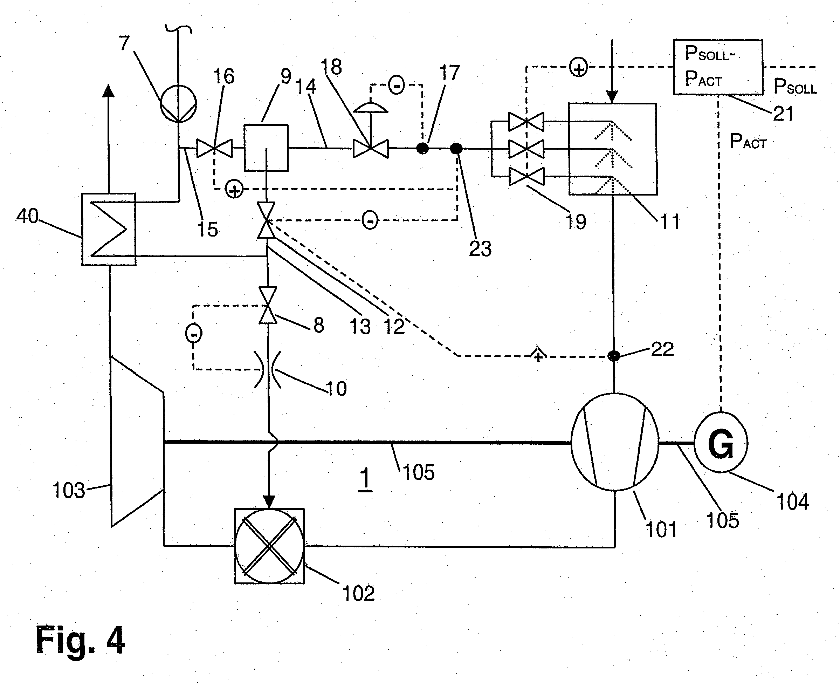

Die in Figur 4 dargestellte Gasturbogruppe weist eine Dampfeinspritzung in die Brennkammer 102 auf. Eine Dampfeinspritzung über Brennerlanzen ist beispielsweise zur Stickoxidminimierung wohlbekannt. Wasser wird von der Pumpe 7 zu einem Abhitzedampferzeuger 40 gefördert und dort verdampft. Ein Teil des erzeugten Dampfes wird über eine Massenstromregelstrecke, umfassend ein Stellorgan 8 und eine Massenstrommessstelle 10, auf an sich bekannte Weise in die Brennkammer 102 eingedüst. Auch eine Eindüsung stromab der Brennkammer 102 und stromauf der Turbine 103 ist aus dem Stand der Technik bekannt. Die Kriterien, nach denen der Massenstrom-Sollwert beispielsweise in Abhängigkeit von der Generatorleistung P_{ACT} und einer Brennstoffmenge festgelegt wird, sind an andern Orten hinreichend beschrieben; detailliertere Ausführungen würden den hier gesetzten Rahmen ganz entschieden sprengen. Stromab der Pumpe 7 und stromauf des Dampferzeugers 40 zweigt eine Bypassleitung 15 ab, welche unter Druck gesetztes, nicht erwärmtes Wasser zu einem Mischvorwärmer 9 leitet. Stromab des Dampferzeugers 40 zweigt eine Leitung 13 ab, welche einen Teilstrom des erzeugten Dampfes als Heizmedium zum Mischvorwärmer 9 leitet. Erwärmte Flüssigkeit strömt über die Zuführleitung 14 auf oben beschriebene Weise zur Zerstäubungsvorrichtung 11. Die Temperatur der Zerstäubungsflüssigkeit wird an der Messstelle 23 ermittelt, und auf einen Sollwert eingeregelt. Hierzu ist sowohl in der Bypassleitung 15 ein Bypass-Stellorgan 16 angeordnet, und in der Dampfleitung 13 ist ein Heizdampf-Stellventil 12 angeordnet. Wenn die Temperatur der Zerstäubungsflüssigkeit den Sollwert überschreitet, wird das Bypass-Stellorgan 16 geöffnet und das Heizdampf-Stellventil 12 geschlossen.

Wenn umgekehrt der Temperatur-Istwert unter den Sollwert fällt, wird das Bypass-Stellorgan 16 geschlossen und das Heizdampf-Stellventil 12 geöffnet. Auf die in Verbindung mit Figur 3 beschriebene Weise ist eine Grenzregelung der Temperatur im Zuströmkanal, die mit der Messstelle 22 ermittelt wird, implementiert.

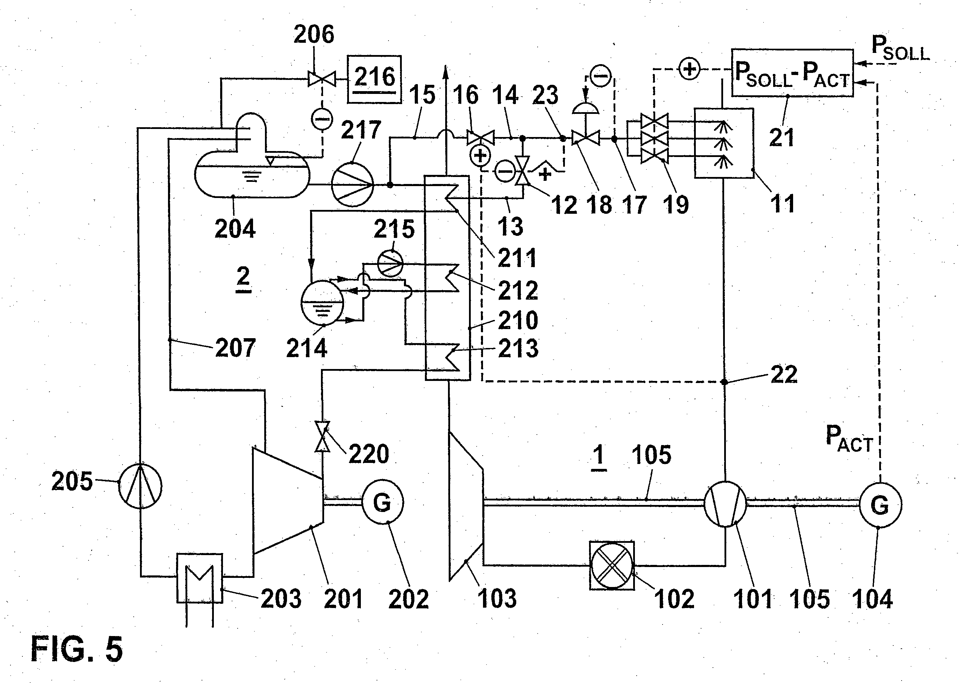

Die in Figur 5 dargestellte Kraftwerksanlage ist eine Kombinanlage, und umfasst neben der Gasturbogruppe 1 einen Wasser-Dampf-Kreislauf 2. Der an sich bekannte Wasser-Dampf-Kreislauf 2 umfasst einen Abhitzedampferzeuger 210, welcher seinerseits einen Vorwärmer 211, einen Verdampfer 212, einen Überhitzer 213, sowie eine Dampftrommel 214 und eine Umwälzpumpe 215 für den Verdampfer aufweist. Der Abhitzedampferzeuger wird auf an sich wohlbekannte Weise von den Abgasen der Gasturbogruppe durchströmt, und nutzt deren Restwärme zur Dampferzeugung. Die Funktionsweise des Wasser-Dampf-Kreislaufs ist dem Fachmann an sich ebenfalls geläufig: Der erzeugte Dampf wird über das Frischdampf-Regelventil 220 einer Dampfturbine 201 zugeleitet und dort zum Antrieb eines Generators 202 entspannt. Das Frischdampf-Regelventil wird auf an sich bekannte Weise von einem nicht dargestellten Dampfturbinen-Leistungsregler angesteuert. Der entspannte Dampf wird in einen Kondensator 203 geleitet, und dort kondensiert. Das Kondensat, welches in Abhängigkeit von der Kondensatortemperatur bei einem Druck von rund 30-50 mbar vorliegt, wird von einer Kondensatpumpe 205 in den Speisewasserbehälter 204 gefördert, der, wie unten dargelegt, vorliegend gleichzeitig als Entgaser dient. Die Kesselspeisepumpe 217 fördert das Kondensat, welches im Speisewasserbehälter typischerweise einen Druck im Bereich von 2 bis 5 bar aufweist, auf den Frischdampfdruck und in den Dampferzeuger, der, was dem Fachmann ebenfalls geläufig ist, in der Reihenfolge Vorwärmer, Verdampfer, Überhitzer durchströmt wird, womit der Kreislauf geschlossen wird. Dem Fachmann sind zahlreiche Abwandlungen des dargestellten Kreislaufs geläufig, was im Detail jedoch nicht primär erfindungswesentlich ist. Vorliegend wird ein teilentspannter Dampfmassenstrom 207 aus der Dampfturbine entnommen und als Entgasungsmedium dem Speisewasserbehälter 204 zugeführt. Dieses kann auch dazu dienen, das Speisewasser auf eine Temperatur vorzuwärmen, die eine Taupunkfsunterschreitung der Gasturbogruppen-Rauchgase im Bereich des Vorwärmer 211 zu vermeiden vermag. Der Speisewasserbehälter weist weiterhin eine Niveauregulierung auf, welche Wasserverluste aufgrund von unvermeidlichen Leckagen oder beim Entgasen des Kondensats auszugleichen vermag. Die Niveaumessung regelt ein Zulaufventil 206, welches die Zufuhr von Zusatzwasser von einer Wasseraufbereitungsanlage 216 steuert. Die Niveauregelung kann kontinuierlich oder auch im Sinne einer Zweipunktregelung erfolgen. Im Strömungsweg des Dampferzeugers, vorliegend im Vorwärmer 211, zweigt eine Abzweigleitung 13 aus dem Wasser-Dampf-Kreislauf ab, über die erwärmte Flüssigkeit zur Zerstäubungsvorrichtung 11 geleitet wird. Stromab der Speisepumpe 217 und stromauf des Dampferzeugers 210 zweigt eine Bypassleitung 15 aus dem Wasser-Dampf-Kreislauf ab. Beide Abzweigleitungen 13 und 15 münden in einer gemeinsamen Zuführleitung 14 zur Zerstäubungsvorrichtung 11. Die Vermischung von vorgewärmtem und nicht vorgewärmtem Medium erfolgt also stromauf der Zerstäubungseinrichtung, was diese Ausführungsform besonders im Zusammenhang mit nicht hilfsmedienunterstützten Zerstäubern vorteilhaft gestaltet. Stellorgane 12 und 16 ermöglichen eine Verstellung der relativen Massenstromanteile der nicht vorgewärmten Flüssigkeit in der Bypassleitung 15 und der vorgewärmten Flüssigkeit in der Leitung 13, und damit eine Einstellung der Temperatur der Flüssigkeit in der Zuführleitung 14. Im Zuströmkanal, hinreichend weit stromab der Zerstäubungsvorrichtung und nahe am Verdichtereinlass, ist eine Temperaturmessstelle 22 angeordnet, welche die Temperatur der feuchten Luft oder des Luft-Tropfen-Gemisches bestimmt. Aufgrund der Verdunstungswirkung und der Beschleunigung der Strömung zum Verdichtereinlass hin kann die Temperatur an dieser Stelle erheblich unter der Umgebungstemperatur liegen. Abhängig von diesen Messwerten werden die Stellorgane 12 und 16 angesteuert. Dies regelt aber nur die Massenstromverhältnisse von vorgewärmtem und nicht vorgewärmtem Fluid; der Gesamtmassenstrom wird weiterhin auf die oben beschriebene Weise durch die Absperrorgane 19 und den Regler 21 in Abhängigkeit von der Nettoleistung der Gasturbogruppe gesteuert. In einem ersten Betriebszustand ist das Stellorgan 12 vollständig geschlossen. Der gesamte Massenstrom der Zerstäubungsvorrichtung 11 wird ohne Erwärmung durch die erste Bypassleitung 15 geleitet. Damit wird eine maximale Abkühlung der Ansaugluft der Gasturbogruppe erreicht, weil die eingedüste Flüssigkeit die niedrigst mögliche Temperatur aufweist. Wenn die an der Messstelle 22 gemessene Temperatur nunmehr einen bestimmten Wert, beispielsweise 7°C oder 5°C unterschreitet, wird das Stellorgan 12 ein Stück geöffnet, und Stellorgan 16 ein Stück geschlossen. Damit durchströmt ein Teil des einzudüsenden Wassers den Vorwärmer 211 des Dampferzeugers 210 und wird dort erwärmt. Die Temperatur des einzudüsenden Wassers wird damit erhöht, und in der Konsequenz steigt die auch Temperatur am Verdichtereintritt an. Eine weitere Temperaturmessstelle 23 ist stromauf der Zerstäubungsvorrichtung und stromab der Zusammenführung der vorgewärmten und der nicht vorgewärmten Flüssigkeit angeordnet. Wenn die dort gemessene Zerstäubungstemperatur einen bestimmten Sicherheitsabstand von beispielsweise 5°C oder 8°C zur Siedetemperatur der Flüssigkeit bei Umgebungsdruck unterschreitet, wird das Stellorgan 12 geschlossen. Auf Meereshöhe und Betrieb mit Wasser liegt der kritische Temperaturmesswert beispielsweise im Bereich von 90°C bis 95 °C, bei hochgelegenen Installationen entsprechend niedriger. Diese Grenzwertregelung kann zwar zu Einschränkungen des Betriebes führen, verhindert aber schwerwiegende Kavitationsschäden, welche an nicht speziell vorbereiteten Einspritzdüsen der Zerstäubungsvorrichtung 11 auftreten würden, wenn die Flüssigkeit beim Austritt aus der Düse spontan siedet. Die beschriebene Temperaturregelung ist interessant bei Gasturbogruppen, welche an Orten installiert werden, wo an sich kein sogenanntes dem Fachmann geläufiges Anti-Icing System erforderlich ist, an denen aber durch den Fogging oder High Fogging Betrieb eine Unterschreitung der Eisbildungstemperatur auftreten kann. Bei einem vorbestimmten eingespritzten Flüssigkeitsmassenstrom und einer limitierten Flüssigkeitstemperatur ist die auf diese Weise erzielbare Temperaturerhöhung selbstverständlich begrenzt. Eine absolute Temperaturerhöhung der Luft ist dann realisierbar wenn der Massenstrom der Flüssigkeit, welche als Tropfen mitgeführt werden, um ein Vielfaches über dem verdampften Flüssigkeitsmassenstrom liegt, damit die zusätzlich eingebrachte fühlbare Wärme die Verdunstungswärme überschreitet. In jedem Falle lässt sich aber der Umgebungstemperaturbereich, in dem eine Fogging- oder High Fogging-Installation betrieben werden kann, deutlich erweitern. Wenn ein Unterschreiten der minimal zulässigen Temperatur am Verdichtereintritt nicht mehr vermieden werden kann, muss die Zerstäubungsvorrichtung 11 selbstverständlich ausser Betrieb genommen werden. Der in der Zerstäubungsvorrichtung 11 einzudüsende Flüssigkeitsmassenstrom wird von der Wasseraufbereitungsanlage 216 bereitgestellt. Die Regelung des bereitzustellenden Wassermassenstroms erfolgt durch die Niveauregelung im Speisewasserbehälter 204, welche dafür Gewähr leistet, dass der Massenstrom, welcher zur Zerstäubung im Ansaugtrakt der Gasturbogruppe dem Wasser-Dampf-Kreislauf entnommen wird, durch Zufuhr aus der Wasseraufbereitungsanlage 216 ersetzt wird.

In einer weiteren Betriebsweise kann die Zerstäubungsvorrichtung auch als "echtes" Anti Icing System betrieben werden. Dazu muss allerdings die Massenstromregelung von der Leistungsregelung entkoppelt werden, und der Massenstrom muss mit dem Messwert der Messstelle 22 als Regelgrösse betrieben werden. Ein absoluter Temperaturhub ist aber nur dann möglich, wenn tatsächlich soviel erwärmte Flüssigkeit eingedüst wird, dass die Luft am Verdichtereintritt übersättigt ist, also Tropfen mit in den Verdichter eintreten. Auf diese Weise kann bei Installationen, welche ein Anti-Icing an sich nicht oder nur an wenigen Tagen im Jahr benötigen, der Betrieb sichergestellt werden ohne eine aufwändige Anti Icing Vorrichtung speziell anordnen zu müssen.

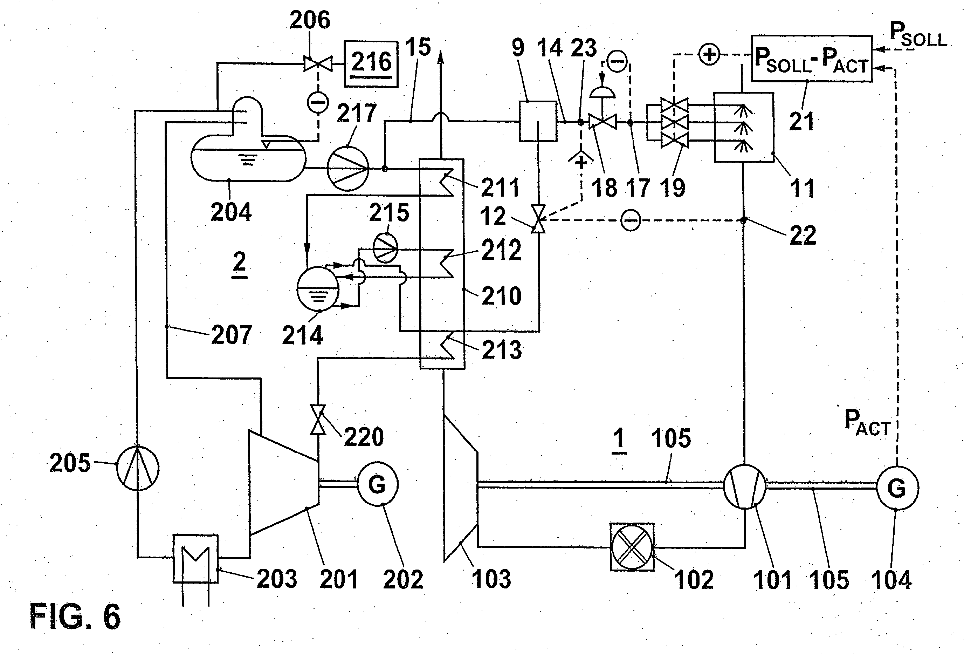

Die Ausführungsform gemäss Figur 6 unterscheidet sich von dem in Figur 5 dargestellten Beispiel unter anderem darin, dass die Bypassleitung 15 und die zweite Leitung 13 nicht unmittelbar in der Zuführleitung 14 münden, sondern in einem Mischvorwärmer 9, der seinerseits eine Mündung in die Zuführleitung 14 aufweist. In der Bypassleitung 15 geführtes Wasser wird im Mischvorwärmer 9 mit einem im Abhitzedampferzeuger 210 entnommenen und über eine Abzweigleitung und das Stellorgan 12 geführten Heizmedium vermischt und dabei erwärmt. Das Heizmedium wird im dargestellten Beispiel als überhitzter Dampf im Überhitzer 213 entnommen. Diese Ausführungsform erweist sich besonders auch dann als geeignet, wenn zur Flash-Zerstäubung ein wesentlicher Temperaturhub erforderlich ist, weil der Heizmedien-Massenstrom vergleichsweise gering ausfallen kann. Selbstverständlich ist es auch möglich, die Abzweigleitung an der Dampftrommel 214 zur Entnahme von Sattdampf oder Sattwasser anzuordnen. Eine weitere mögliche Ausführungsform zeichnet sich dadurch aus, dass im Verdampfer 212 Siedewasser oder ein Siedewasser-Sattdampfgemisch entnommen wird. In einer weiteren Ausführungsform wird aus dem Vorwärmer 211 erhitztes Wasser als Heizmedium entnommen. Die Auswahl der Entnahmestelle ist letzten Endes von Fachmann unter Zuhilfenahme seines Fachwissens und unter Beachtung der thermodynamischen Randbedingungen vorzunehmen. Die exemplarisch dargestellte Verwendung energetisch hochwertigen Dampfes als Heizmedium ermöglicht eine grosse Temperaturerhöhung bei geringem Heizmedienmassenstrom. Die Verwendung eines niedrigwertigeren Heizmediums hingegen erfordert einen höheren Heizmedienmassenstrom, erleichtert aber andererseits eine präzise Temperaturregelung, da ein Regeleingriff auf den Heizmassenstrom dann selbstverständlich weniger stark auf die als Regelgrösse herangezogene Temperatur wirkt. Weiterhin ist bei der dargestellten Ausführungsform nur in der Heismedienleitung ein Stellorgan 12 angeordnet. Dies erleichtert die Regelung, da nur auf ein Stellorgan eingegriffen werden muss; allerdings kann der nicht vorgewärmte Massenstrom durch die Bypassleitung 15 nicht getrennt geregelt und damit faktisch auch nicht abgestellt werden. Es versteht sich von selbst, dass die in Figur 6 dargestellte Schaltung der Abzweigleitungen auch zur Regelung der Temperatur der Zerstäubungsflüssigkeit herangezogen werden kann.

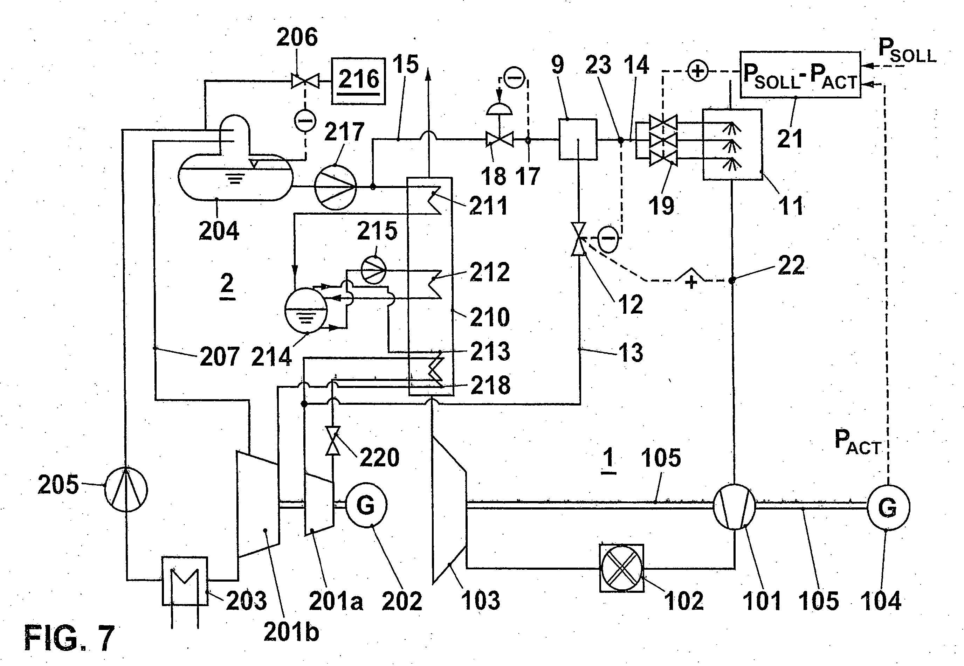

Die Ausführungsform gemäss Figur 7 zeichnet sich einerseits dadurch aus, dass die Temperatur der Zerstäubungsflüssigkeit, Messstelle 23, als Regelgrösse herangezogen wird, wobei eine Grenzregelung der Temperatur im Zuströmkanal, Messstelle 22, implementiert ist, im Sinne einer Begrenzung der dort gemessenen Temperatur auf einen Maximalwert. Bei der Ausführungsform gemäss Figur 7 wird als Heizmedium Anzapfdampf aus der Dampfturbine verwendet. Dabei muss der Mischvorwärmer 9 selbstverständlich stromab des Druckregelventils 18 angeordnet sein, und der Druck muss auf einen Wert eingeregelt sein, der unterhalb des Druckes an der Anzapfstelle des Wasser-Dampf-Kreislaufs liegt. In einer Vielzahl der Fälle wird es nicht wirtschaftlich sein, speziell eine Anzapfstelle an der Dampfturbine anzuordnen. Es ist daher ein Wasser-Dampf-Kreislauf mit Zwischenüberhitzung dargestellt. Die Dampfturbine besteht dabei aus einer Hochdruckdampfturbine 201 a und einer Mittel-/Niederdruckdampfturbine 201 b. Frischdampf aus dem Überhitzer 213 wird in der Hochdruckturbine 201 a in etwa bis zum Sattdampfzustand entspannt, und dann in einem Zwischenüberhitzer 218 wieder in etwa auf Frischdampftemperatur gebracht und in der Mittel-/Niederdruckturbine 201b auf Kondensatordruck entspannt. Es kann hier besonders einfach im Bereich des Zwischenüberhitzers 218 die Dampfleitung 13 anschliessen. Dabei wird Sattdampf am Austritt aus der Hochdruckturbine 201a entnommen, wie dargestellt, oder überhitzter Dampf am Eintritt in die Mittel-/Niederdruckturbine 201 b. Die Abzweigleitung 13 kann auch am Zwischenüberhitzer 218 anschliessen, jedoch ist ein Zugang in den Abhitzedampferzeuger apparativ aufwändiger als ein Anschluss an ausserhalb des Dampferzeugers gelegene Zu- und Abströmleitungen.

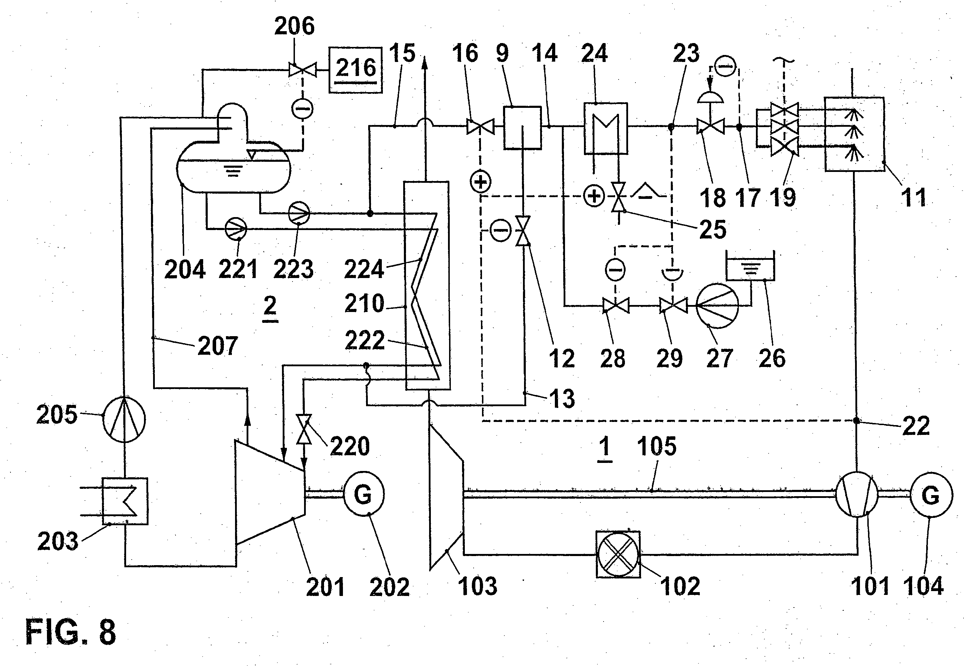

Die in Figur 8 dargestellte Ausführungsform weist einen Zweidruck-Wasser-Dampf-Kreislauf auf, wobei der Abhitzedampferzeuger als Zweidruck-Eindurchlaufkessel ausgeführt ist. Vom Speisewasserbehälter 204 zweigt dabei ein Hochdruckzweig mit der Hochdruckspeisepumpe 221 und der Hochdruck-Dampferzeugerberohrung 222 sowie ein Mittel-/Niederdruckzweig mit der Mittel-/Niederdruckspeisepumpe 223 und der Mittel-/Niederdruck-Dampferzeugerberohrung 224 ab. Der erzeugte Hochdruckdampf wird über die gesamte Dampfturbine 201 entspannt, während der Mittel-/Niederdruckzweig an einer weiter stromab der Dampfturbine gelegenen Zwischeneinspeisung, an einer Stelle angepassten Druckes, in diese mündet. Diese Schaltungsvariante eines Wasser-Dampf-Kreislaufes ist dem Fachmann an sich geläufig, und bedarf daher keiner weiteren Erläuterungen. Des Weiteren gelten die oben gemachten Darlegungen zur Funktion der Komponenten des Wasser-Dampf-Kreislaufs. Wenn der Frischdampfdruck des Wasser-Dampf-Kreislaufes erheblich über dem notwendigen Zerstäubervordruck der Zerstäubungsvorrichtung 11 liegt, muss das Druckregelventil 18 sehr viel Druck abbauen. Dies ist für Druckzerstäubungsvorrichtungen besonders bei hohen Frischdampfdrücken der Fall, aber auch bei der Verwendung hilfsmedienunterstützter Zerstäuber oder beispielsweise Rotationszerstäubern oder gegebenenfalls auch bei Anwendung der Flash-Zerstäubung. Abhängig vom einzudüsenden Wassermassenstrom und dem notwendigen Druckabbau kann dies zwar vergleichsweise geringe, aber immerhin spürbare Auswirkungen auf den Eigenenergieverbrauch und damit auf den Wirkungsgrad der Kraftwerksanlage haben; beispielsweise entspricht bei einem Wassermassenstrom von 25 kg/s eine Drosselung um 50 bar einer nutzlos verheizten Leistung von rund 125 kW. Es ist also erstrebenswert, die Abzweigestellen für die Anspeisung der Zerstäubungsvorrichtung 11 möglichst bei angepasstem Druck anzuordnen. Dies ist im Ausführungsbeispiel realisiert, indem die Abzweigungen im Mittel-/Niederdruckzweig angeordnet sind. Stromab der Mittel-/Niederdruckspeisepumpe 223 und stromauf der Mittel-/Niederdruck-Dampferzeugerberohrung zweigt eine Bypassleitung 15 vom Wasser-Dampf-Kreislauf ab; diese führt nicht vorgewärmtes Druckwasser über ein Stellorgan 16 zum Mischvorwärmer 9. Eine Abzweigleitung 13 zweigt stromab des Kessels von der Mittel-/Niederdruck-Wärmetauscherberohrung ab. Ebenso könnte die Abzweigung prinzipiell auch innerhalb des Kessels angeordnet sein. Die dargestellte Variante ist im Allgemeinen aber wesentlich leichter realisierbar, weil kein Zugang in den Kessel geschaffen werden muss. Es ist durchaus auch möglich, dass eine Abzweigleitung unmittelbar stromab der Kondensatpumpe 205 aus dem Wasser-Dampf-Kreislauf abzweigt, wenn der dort vorherrschende Druck mit dem geforderten Flüssigkeitsvordruck der Zerstäubungsvorrichtung kompatibel ist; dies ist beispielsweise bei der Verwendung hilfsmedienunterstützter Zerstäuber der Fall, wo kein hoher Flüssigkeits-Vordruck gefordert ist. Selbstverständlich könnte auch eine dort abzweigende Leitung über einen im Bereich des Abhitzedampferzeugers angeordneten separaten Wärmetauscher geführt werden. Die Leitung 13 führt über das Stellorgan 12 einen regelbaren Massenstrom überhitzten Dampfes als Heizmedium zum Mischvorwärmer 9. Aus dem Mischvorwärmer 9 strömt vorgewärmtes Wasser in die Zuführleitung 14. Weiterhin ist in der Ausführungsform gemäss Figur 8 in der Flüssigkeitsleitung 14 ein Kühler 24 angeordnet. Der Kühlmittelzustrom zu dem Kühler 24 und damit dessen Kühlungsleistung wird durch das Stellorgan 25 gesteuert. Im Zusammenspiel der Stellorgane 12 und 16 ist es, wie oben dargelegt, möglich, die mittels der Temperaturmessstelle 22 erfasste Temperatur im Zuströmkanal vor dem Verdichtereintritt auf einen Sollwert oder in eine Sollwertintervall oder auf einen Mindestwert zu regeln. Es ist weiterhin möglich, wenigstens innerhalb gewisser Grenzen durch ein Abkühlen der Flüssigkeit im Kühler 24 die Temperatur im Zuströmkanal abzusenken. Es ist also zum Beispiel möglich, die Temperatur an der Messstelle 22 auf einen möglichst niedrigen Wert oberhalb der Temperatur im Verdichtereinlass einsetzender Eisbildung einzuregeln. Grenzen sind dadurch gesetzt, dass die Temperatur an der Messstelle 23 immer oberhalb der Gefriertemperatur der Flüssigkeit bleiben muss. Für reines Wasser sind der zusätzlichen Ansaugluftkühlung durch Vorkühlung der zu zerstäubenden Flüssigkeit recht enge Grenzen gesetzt. Eine Massnahme ist das Zudosieren von Alkoholen oder anderen geeigneten Frostschutzadditiven stromauf des Kühlers. In der Ausführungsform gemäss Figur 8 ist ein Additivtank 26 angeordnet, von dem aus über eine Pumpe 27, ein Absperrventil 29, sowie ein Stellorgan 28 der Zerstäubungsflüssigkeit stromauf des Kühlers 24 bei Bedarf ein geeignetes Additiv zugemischt werden kann. Wenn die Temperatur an der Messstelle 23 einen Grenzwert unterschreitet, wird das Absperrorgan 29 geöffnet. Das Stellorgan 28 wird so geregelt, dass der geförderte Additivmassenstrom mit sinkender Temperatur gemäss einem vorgegebenen Additivkonzentrations-Temperatur-Verlauf steigt. Es ist auf diese Weise möglich eine maximal zulässige Abkühlung der Luft am Verdichtereintritt bei gleichzeitiger Übersättigung der Luft mit Feuchte und dem daraus resultierenden Innenkühlungseffekt im Verdichter zu erzielen. Damit kann die Netto-Leistungsabgabe der Gasturbogruppe, welche zum Antrieb des Generators zur Verfügung steht, maximiert werden.

Selbstverständlich ergeben sich vielfältige Kombinationsmöglichkeiten unter den oben gewählten Ausführungsformen.

### Bezugszeichenliste

- 1: Gasturbogruppe
- 2: Dampfturbogruppe
- 7: Pumpe
- 8: Stellorgan
- 9: Mischvorwärmer
- 10: Massenstrom-Messstelle
- 11: Zerstäubungsvorrichtung, Vernebelungsvorrichtung
- 12: Absperr- und/oder Drosselorgan, Stellorgan, Heizdampf-Stellventil
- 13: Leitung, Abzweigleitung, Dampfleitung, Hiezdampfleitung
- 14: Zuführleitung
- 15: Abzweigleitung, Bypassleitung
- 16: Absperr- und/oder Drosselorgan, Stellorgan, Bypass-Stellventil
- 17: Druckmessstelle
- 18: Druckregelventil
- 19: Massenstrom-Stellorgan, Steuerblock, Absperrventile
- 21: Funktionsblock, Regler
- 22: Temperaturmessstelle
- 23: Temperaturmessstelle
- 24: Kühler
- 25: Stellorgan
- 26: Additivtank
- 27: Förderpumpe
- 28: Stellorgan
- 29: Absperrorgan
- 30: Temperaturmessstelle
- 31: Zirkulationspumpe
- 32: Kühler
- 33: Stellorgan
- 34: Zirkulationspumpe
- 35: Kühler
- 36: Stellorgan
- 37: Temperaturmessstelle
- 40: Abgaswärmetauscher
- 101: Verdichter
- 102: Brennkammer
- 103: Turbine
- 104: Generator
- 105: Welle
- 106: Hochdruck-Kühlluftpfad
- 107: Niederdruck-Kühlluftpfad
- 108: Hochdruck-Kühlluftkühler
- 109: Niederdruck-Kühlluftkühler
- 111, 112,..., 11n: Düsenrohre
- 191, 192, ..., 19n: Absperrorgane
- 190: Funktionsblock
- 201: Dampfturbine
- 201a: Hochdruck-Dampfturbine
- 201b: Mittel-/Niederdruckdampfturbine
- 202: Generator
- 203: Kondensator
- 204: Speisewasserbehälter, Speisewasserbehälter/Entgaser
- 205: Kondensatpumpe
- 206: Stellorgan
- 207: Dampfentnahme
- 210: Abhitzedampferzeuger, Kessel
- 211: Vorwärmer
- 212: Verdampfer
- 213: Überhitzer, Hochdrucküberhitzer
- 214: Trommel
- 215: Umwälzpumpe
- 216: Wasseraufbereitungsanlage
- 217: Kesselspeisepumpe
- 218: Mittel-/Niederdrucküberhitzer
- 220: Frischdampf-Regelventil
- 221: Hochdruck-Speisepumpe
- 222: Hochdruck-Wärmetauscherberohrung, Hochdruck-Dampferzeugerberohrung
- 223: Mittel-/Niederdruck-Speisepumpe
- 224: Mittel-/Niederdruck-Wärmetauscherberohrung, Mittel-/Niederdruck-Dampferzeugerberohrung

- P_{ACT}: Ist-Leistung
- P_{SOLL}: Leistungs-Sollwert

## Patentansprüche

1. Verfahren zum Betrieb einer Kraftwerksanlage, umfassend eine luftatmende Verbrennungsmaschine (1) mit einem Lufteinlass und einem stromauf des Lufteinlasses angeordneten Zuströmkanal, sowie einer im Zuströmkanal angeordneten Zerstäubungsvorrichtung (11), bei welchem Verfahren in der Zerstäubungsvorrichtung eine Flüssigkeit in den Zuströmkanal eingedüst wird, umfassend die weiteren Schritte:
wenigstens einer der folgenden Temperaturen zu messen: Temperatur der einzudüsenden Zerstäubungsflüssigkeit stromauf der
Zerstäubungsvorrichtung oder Temperatur im Zuströmkanal stromab der Zerstäubungsvorrichtung; und
eine der genannten Temperaturen als Regelgrösse heranzuziehen; **gekennzeichnet durch** den Schritt: die Temperatur der Zerstäubungsflüssigkeit in Abhängigkeit von der Regelgrösse zu steuern.

2. Verfahren gemäss Anspruch 1, **dadurch gekennzeichnet, dass** die Temperatur der Zerstäubungsflüssigkeit innerhalb eines Sollwertintervalls oder auf einen konstanten Sollwert geregelt wird.

3. Verfahren gemäss Anspruch 2, **dadurch gekennzeichnet, dass** auf eine Temperatur der Zerstäubungsflüssigkeit auf eine oberhalb des Siedepunktes bei Umgebungsdruck liegende Temperatur geregelt wird.

4. Verfahren gemäss einem der Ansprüche 2 oder 3, **gekennzeichnet durch** die Schritte:
die Temperatur im Zuströmkanal stromab der Zerstäubungsvorrichtung zu bestimmen;
die Flüssigkeitseindüsung beim Unterschreiten eines minimal zulässigen Wertes der Temperatur im Zuströmkanal ausser Betrieb zu setzen;
die Flüssigkeitseindüsung beim Überschreiten eines maximal zulässigen Wertes der Temperatur im Zuströmkanal ausser Betrieb zu setzen.

5. Verfahren gemäss Anspruch 1, **gekennzeichnet durch** die Schritte:
die Temperatur der Zerstäubungsflüssigkeit beim Unterschreiten eines Sollwertes oder unteren Schwellenwertes der Temperatur im Zuströmkanal zu erhöhen;
die Temperatur des Zerstäubungsflüssigkeit beim Überschreiten eines Sollwertes oder oberen Schwellenwertes der Temperatur im Zuströmkanal zu vermindern.

6. Verfahren gemäss Anspruch 1, **gekennzeichnet durch** den Schritt:
die Temperatur der Zerstäubungsflüssigkeit beim Unterschreiten einer unteren Grenztemperatur im Zuströmkanal zu erhöhen.

7. Verfahren gemäss einem der Ansprüche 5 oder 6, **gekennzeichnet durch** den Schritt:
die Temperatur der Zerstäubungsflüssigkeit auf einen Maximalwert zu begrenzen.

8. Verfahren gemäss Anspruch 7, **gekennzeichnet durch** den Schritt:
beim Erreichen oder Unterschreiten einer zulässigen Minimaltemperatur im Zuströmkanal und gleichzeitigem Erreichen der maximal zulässigen Temperatur der Zerstäubungsflüssigkeit die Flüssigkeitseindüsung ausser Betrieb zu nehmen.

9. Verfahren gemäss einem der vorstehenden Ansprüche, **gekennzeichnet durch** den Schritt:
die Temperatur der Zerstäubungsflüssigkeit beim Erreichen oder Überschreiten einer oberen Temperatur im Ansaugkanal abzusenken.

10. Verfahren gemäss einem der vorstehenden Ansprüche, **gekennzeichnet durch** den Schritt, die Temperatur der Zerstäubungsflüssigkeit nach unten auf einen Mindestwert zu begrenzen.

11. Verfahren gemäss Anspruch 10, **gekennzeichnet durch** den Schritt:
beim Überschreiten einer zulässigen Maximaltemperatur im Zuströmkanal und gleichzeitigem Erreichen der minimal zulässigen Temperatur der Zerstäubungsflüssigkeit die Flüssigkeitseindüsung ausser Betrieb zu nehmen.

12. Verfahren gemäss einem der vorstehenden Ansprüche, **gekennzeichnet durch** den Schritt:
beim Unterschreiten einer unteren Schwellentemperatur der Zerstäubungsflüssigkeit einen Zusatzstoff, insbesondere ein Frostschutzmittel, der Zerstäubungsflüssigkeit zuzumischen.

13. Verfahren gemäss einem der vorstehenden Ansprüche, **gekennzeichnet durch** den Schritt:
wenigstens einen ersten Teilmassenstrom der Zerstäubungsflüssigkeit durch eine Wärmezuführvorrichtung (40, 108, 109, 210) zu leiten.

14. Verfahren gemäss Anspruch 13, **gekennzeichnet durch** den Schritt:
zur Steuerung der Temperatur der Zerstäubungsflüssigkeit die Wärmezufuhr in der Wärmezuführvorrichtung zu steuern.

15. Verfahren gemäss einem der Ansprüche 13 oder 14, **gekennzeichnet durch** die Schritte:
einen zweiten Teilstrom der Zerstäubungsflüssigkeit **durch** eine Bypassleitung (15) zu führen;
den ersten Teilstrom und den zweiten Teilstrom vorgängig der Zerstäubung zusammenzuführen; und
zur Steuerung der Temperatur der Zerstäubungsflüssigkeit wenigstens einen der Teilströme variabel zu steuern.

16. Verfahren gemäss Anspruch 15, **dadurch gekennzeichnet, dass** die Temperatur der Zerstäubungsflüssigkeit stromab der Stelle der Zusammenführung der Teilströme gemessen wird.

17. Verfahren gemäss einem der Ansprüche 15 oder 16, **gekennzeichnet durch** die Schritte:
den ersten Teilstrom im Wärmezuführmittel zu verdampfen; und
den ersten Teilstrom und den zweiten Teilstrom in einem Mischvorwärmer (9) zusammenzuführen.

18. Verfahren gemäss einem der Ansprüche 13 bis 17, **gekennzeichnet durch** den Schritt:
wenigstens den ersten Teilstrom vor der Einleitung in die Wärmezuführvorrichtung auf einen Druck zu fördern, welcher wenigstens dem Flüssigkeits-Vordruck der Zerstäubungsvorrichtung entspricht.

19. Verfahren gemäss einem der Ansprüche 15 bis 18, **gekennzeichnet durch** die Schritte:
einen Flüssigkeitsmassenstrom **durch** einen Abgaswärmetauscher (40) der Kraftmaschine zu leiten;
den ersten Teilmassenstrom wenigstens **durch** einen Teil des Strömungsweges des Abgaswärmetauschers zu leiten; und
den zweiten Teilstrom stromauf des Abgaswärmetauschers abzuzweigen.

20. Verfahren gemäss einem der vorstehenden Ansprüche, **gekennzeichnet durch** die Schritte:
wenigstens einen Teil der Zerstäubungsflüssigkeit vor der Zerstäubung durch einen Kühler (24) zu leiten; und
zur Steuerung der Temperatur der Zerstäubungsflüssigkeit die Kühlungsleistung des Kühlers zu steuern.

21. Verfahren gemäss einem der vorstehenden Ansprüche, **dadurch gekennzeichnet, dass** die Zerstäubung der Flüssigkeit als Druckzerstäubung erfolgt, wobei der Zerstäubungsdruck der Zerstäubungsflüssigkeit vorzugsweise 20 bar übersteigt.

22. Kraftwerksanlage zur Durchführung des Verfahrens gemäss einem der vorstehenden Ansprüche, wobei die Verbrennungskraftmaschine eine Gasturbogruppe (1) ist, und wobei der Lufteinlass der Verdichtereinlass der Gasturbogruppe (1) ist, die Gasturbogruppe (1) wenigstens umfassend einen Verdichter (101), eine Brennkammer (102), eine Turbine (103), einen Generator (104), eine Zerstäubungsvorrichtung (11) für eine Flüssigkeit und eine Wärmezuführeinrichtung (40, 108, 109, 210) zum Erwärmen der zu zerstäubenden Flüssigkeit, wobei die Wärmezuführeinrichtung (40, 108, 109, 210) ein Wärmeerzeuger mit einem Wärmeübertrager ist.

23. Kraftwerksanlage nach Anspruch 22, **dadurch gekennzeichnet, dass** die Wärmezuführeinrichtung mit einem Kühlkreislauf einer Wärmekraftmaschine thermisch gekoppelt ist.

24. Kraftwerksanlage nach Anspruch 22, **dadurch gekennzeichnet, dass** die Wärmezuführeinrichtung ein Kühlluftkühler (108, 109) der Gasturbogruppe (1) ist.

25. Kraftwerksanlage nach Anspruch 22, **gekennzeichnet durch** einen ersten, **durch** die Wärmezuführeinrichtung (40, 108, 109, 210) führenden Strömungsweg (13), einen zweiten, die Wärmezuführeinrichtung (40, 108, 109, 210) umgehenden Strömungsweg (15), sowie eine Zerstäubungsflüssigkeits-Zuführleitung (14), wobei beide Strömungswege in die Zuführleitung (14) zur Zerstäubungsvorrichtung (11) münden, und wobei in wenigstens einem der Strömungswege (13, 15) ein verstellbares Drosselorgan (12, 16) angeordnet ist.

26. Kraftwerksanlage nach Anspruch 22, **dadurch gekennzeichnet, dass** die Wärmezuführeinrichtung (40, 108, 109, 210) ein Abhitzedampferzeuger (210) eines Wasser-Dampf-Kreislaufes ist.

27. Kraftwerksanlage gemäss Anspruch 22, **gekennzeichnet durch** einen im Strömungsweg (14) der Zerstäubungsflüssigkeit stromauf der Zerstäubungsvorrichtung (11) angeordneten Kühler (24).

28. Kraftwerksanlage gemäss einem der Ansprüche 22 bis 27, **dadurch gekennzeichnet, dass** die Zerstäubungsvorrichtung (11) Druckzerstäuberdüsen umfasst.

## Claims

1. Method for operating a power plant, comprising an air-breathing combustion engine (1) having an air inlet and an inflow duct arranged upstream of the air inlet, and having an atomization device (11) arranged in the inflow duct, in which method liquid is injected in the atomization device into the inflow duct, comprising the further steps of:
measuring at least one of the following temperatures: temperature of the atomization liquid to be injected upstream of the atomization device and temperature in the inflow duct downstream of the atomization device; and
using one of the abovementioned temperatures as control variable; **characterized by** the step of:
controlling the temperature of the atomization liquid as a function of the control variable.

2. Method according to Claim 1, **characterized in that** the temperature of the atomization liquid is controlled within a desired value range or to a constant desired value.

3. Method according to Claim 2, **characterized in that** the temperature of the atomization liquid is controlled to a temperature that is higher than the boiling point at ambient pressure.

4. Method according to either of Claims 2 and 3, **characterized by** the steps of:
determining the temperature in the inflow duct downstream of the atomization device;
deactivating the injection of liquid if the temperature in the inflow duct drops below a minimum permissible value;
deactivating the injection of liquid if the temperature in the inflow duct exceeds a maximum permissible value.

5. Method according to Claim 1, **characterized by** the steps of:
increasing the temperature of the atomization liquid if the temperature in the inflow duct drops below a desired value or a lower threshold value;
reducing the temperature of the atomization liquid if the temperature in the inflow duct exceeds a desired value or upper threshold value.

6. Method according to Claim 1, **characterized by** the step of:
increasing the temperature of the atomization liquid if the temperature in the inflow duct drops below a lower limit temperature.

7. Method according to either of Claims 5 and 6, **characterized by** the step of:
limiting the temperature of the atomization liquid to a maximum value.

8. Method according to Claim 7, **characterized by** the step of:
deactivating the injection of liquid when the temperature in the inflow duct reaches or drops below a permissible minimum temperature and at the same time the maximum permissible temperature of the atomization liquid is reached.

9. Method according to one of the preceding claims, **characterized by** the step of:
lowering the temperature of the atomization liquid when an upper temperature in the intake duct is reached or exceeded.

10. Method according to one of the preceding claims, **characterized by** the step of limiting the drop in the temperature of the atomization liquid to a minimum value.

11. Method according to Claim 10, **characterized by** the step of:
deactivating the injection of liquid when a permissible maximum temperature in the inflow duct is exceeded and at the same time the minimum permissible temperature of the atomization liquid is reached.

12. Method according to one of the preceding claims, **characterized by** the step of:
admixing an additive, in particular an antifreeze, to the atomization liquid if the temperature of the atomization liquid drops below a lower threshold temperature for the atomization liquid.

13. Method according to one of the preceding claims, **characterized by** the step of:
passing at least a first part mass stream of the atomization liquid through a heat supply device (40, 108, 109, 210).

14. Method according to Claim 13, **characterized by** the step of:
controlling the supply of heat in the heat supply device in order to control the temperature of the atomization liquid.

15. Method according to either of Claims 13 and 14, **characterized by** the steps of:
routing a second part-stream of the atomization liquid through a bypass line (15);
combining the first part-stream and the second part-stream prior to the atomization; and
variably controlling at least one of the part-streams in order to control the temperature of the atomization liquid.

16. Method according to Claim 15, **characterized in that** the temperature of the atomization liquid is measured downstream of the location at which the part-streams are combined.

17. Method according to either of Claims 15 and 16, **characterized by** the steps of:
evaporating the first part-stream in the heat supply means; and
combining the first part-stream and the second part-stream in a mixing preheater (9).

18. Method according to one of Claims 13 to 17, **characterized by** the step of:
delivering at least the first part-stream, prior to its introduction into the heat supply device, at a pressure which corresponds at least to the liquid admission pressure of the atomization device.

19. Method according to one of Claims 15 to 18, **characterized by** the steps of:
passing a liquid mass flow through an exhaust gas heat exchanger (40) of the engine;
passing the first part mass stream at least through part of the flow path of the exhaust-gas heat exchanger; and
branching off the second part-stream upstream of the exhaust-gas heat exchanger.

20. Method according to one of the preceding claims, **characterized by** the steps of:
passing at least part of the atomization liquid through a cooler (24) prior to the atomization; and
controlling the cooling capacity of the cooler in order to control the temperature of the atomization liquid.

21. Method according to one of the preceding claims, **characterized in that** the atomization of the liquid takes place as pressure atomization, with the atomization pressure of the atomization liquid preferably exceeding 20 bar.

22. Power plant for carrying out the method according to one of the preceding claims, in which the combustion engine is a gas turboset (1), and in which the air inlet is the compressor inlet of the gas turboset (1), the gas turboset (1) at least comprising a compressor (101), a combustion chamber (102), a turbine (103), a generator (104), an atomization device (11) for a liquid and a heat supply device (40, 108, 109, 210) for heating the liquid to be atomized, in which the heat supply device (40, 108, 109, 210) is a heat generator with a heat exchanger.

23. Power plant according to Claim 22, **characterized in that** the heat supply device is thermally coupled to a cooling circuit of a heat engine.

24. Power plant according to Claim 22, **characterized in that** the heat supply device is a cooling-air cooler (108, 109) of the gas turboset (1).

25. Power plant according to Claim 22, **characterized by** a first flow path (13), which leads through the heat supply device (40, 108, 109, 210), a second flow path (15), which bypasses the heat supply device (40, 108, 109, 210), and an atomization liquid feedline (14), both flow paths opening out into the feedline (14) to the atomization device (11), and an adjustable throttling member (12, 16) being arranged in at least one of the flow paths (13, 15).

26. Power plant according to Claim 22, **characterized in that** the heat supply device (40, 108, 109, 210) is a heat recovery steam generator (210) of a water/steam cycle.

27. Power plant according to Claim 22, **characterized by** a cooler (24) arranged in the flow path (14) of the atomization liquid upstream of the atomization device (11) .

28. Power plant according to one of Claims 22 to 27, **characterized in that** the atomization device (11) comprises pressure atomizer nozzles.

## Revendications

1. Procédé de conduite d'une centrale électrique comprenant
une machine de combustion (1) consommant de l'air et dotée d'une admission d'air et d'un canal d'amenée disposé en amont de l'admission d'air, ainsi que
un ensemble (11) de pulvérisation disposé dans le canal d'amenée,
un liquide étant dans le procédé injecté dans l'ensemble de pulvérisation situé dans le canal d'amenée,
le procédé comportant les étapes supplémentaires qui consistent à :
mesurer au moins l'une des températures suivantes : température du liquide de pulvérisation à injecter en amont de l'ensemble de pulvérisation ou température régnant dans le canal d'amenée en aval de l'ensemble de pulvérisation et
faire intervenir l'une desdites températures comme grandeur de régulation,
**caractérisé par** l'étape qui consiste à :
commander la température du liquide de pulvérisation en fonction de la grandeur de régulation.

2. Procédé selon la revendication 1, **caractérisé en ce que** la température du liquide de pulvérisation est régulée à l'intérieur d'un intervalle de valeurs de consigne ou à une valeur de consigne constante.

3. Procédé selon la revendication 2, **caractérisé en ce qu'**une température du liquide de pulvérisation est régulée à une température située au-dessus du point d'ébullition à pression ambiante.

4. Procédé selon l'une des revendications 2 ou 3, **caractérisé par** les étapes qui consistent à :
déterminer la température qui règne dans le canal d'amenée en aval de l'ensemble de pulvérisation,
interrompre l'injection de liquide si une valeur minimale admissible de la température qui règne dans le canal d'amenée n'est pas atteinte et
interrompre l'injection de liquide si une valeur maximale admissible de la température dans le canal d'amenée est dépassée.

5. Procédé selon la revendication 1, **caractérisé par** les étapes qui consistent à :
augmenter la température du liquide de pulvérisation si une valeur de consigne ou une valeur de seuil inférieure de la température qui règne dans le canal d'amenée n'est pas atteinte et
abaisser la température du liquide de pulvérisation lorsqu'une valeur de consigne ou une valeur de seuil supérieure de la température qui règne dans le canal d'écoulement est dépassée.

6. Procédé selon la revendication 1, **caractérisé par** l'étape qui consiste à augmenter la température du liquide de pulvérisation si une température limite inférieure n'est pas atteinte dans le canal d'écoulement.

7. Procédé selon l'une des revendications 5 ou 6, **caractérisé par** l'étape qui consiste à limiter la température du liquide de pulvérisation à une valeur maximale.

8. Procédé selon la revendication 7, **caractérisé par** l'étape qui consiste à interrompre l'injection de liquide si une température minimale admissible est atteinte ou n'est pas atteinte dans le canal d'écoulement d'amenée et si en même temps la température maximale admissible du liquide de pulvérisation est atteinte.

9. Procédé selon l'une des revendications précédentes, **caractérisé par** l'étape qui consiste à abaisser la température du liquide de pulvérisation si une température supérieure est atteinte ou dépassée dans le canal d'aspiration.

10. Procédé selon l'une des revendications précédentes, **caractérisé par** l'étape qui consiste à limiter la température du liquide de pulvérisation vers le bas à une valeur minimale.

11. Procédé selon la revendication 10, **caractérisé par** l'étape qui consiste à interrompre l'injection de liquide si une température maximale admissible est dépassée dans le canal d'amenée et si simultanément la température minimale admissible du liquide de pulvérisation est atteinte.

12. Procédé selon l'une des revendications précédentes, **caractérisé par** l'étape qui consiste à mélanger un additif et en particulier un agent de protection contre le gel au liquide de pulvérisation lorsqu'une température de seuil inférieure du liquide de pulvérisation n'est pas atteinte.

13. Procédé selon l'une des revendications précédentes, **caractérisé par** l'étape qui consiste à faire passer au moins un premier écoulement massique partiel de liquide de pulvérisation dans un ensemble (40, 108, 109, 210) d'apport de chaleur.

14. Procédé selon la revendication 13, **caractérisé par** l'étape qui consiste à commander l'apport de chaleur dans l'ensemble d'amenée de chaleur pour commander la température du liquide de pulvérisation.

15. Procédé selon l'une des revendications 13 ou 14, **caractérisé par** les étapes qui consistent à :
amener un deuxième écoulement partiel de liquide de pulvérisation par un conduit de dérivation (15),
rassembler avant la pulvérisation le premier écoulement partiel et le deuxième écoulement partiel et
pour commander la température du liquide de pulvérisation, commander de manière variable au moins l'un des écoulements partiels.

16. Procédé selon la revendication 15, **caractérisé en ce que** la température du liquide de pulvérisation est mesurée en aval de l'emplacement de rassemblement des écoulements partiels.

17. Procédé selon l'une des revendications 15 ou 16, **caractérisé par** les étapes qui consistent à :
vaporiser le premier écoulement partiel dans l'agent d'amenée de chaleur et
rassembler le premier écoulement partiel et le deuxième écoulement partiel dans un préchauffeur-mélangeur (9).

18. Procédé selon l'une des revendications 13 à 17, **caractérisé par** l'étape qui consiste à transporter le premier écoulement partiel, avant son introduction dans l'ensemble d'apport de chaleur, à une pression qui correspond au moins à la pré-pression du liquide de l'ensemble de pulvérisation.

19. Procédé selon l'une des revendications 15 à 18, **caractérisé par** les étapes qui consistent à :
amener un écoulement massique de liquide à travers un échangeur de chaleur de gaz d'échappement (40) de la machine motrice,
ramener le premier écoulement massique partiel au moins à travers une partie du parcours d'écoulement de 1'échangeur de chaleur de gaz d'échappement et
dériver le deuxième écoulement partiel en amont de l'échangeur de chaleur de gaz d'échappement.

20. Procédé selon l'une des revendications précédentes, **caractérisé par** les étapes qui consistent à :
amener au moins une partie du liquide de pulvérisation à travers un refroidisseur (24) avant la pulvérisation et
commander la puissance de refroidissement du refroidisseur pour commander la température du liquide de pulvérisation.

21. Procédé selon l'une des revendications précédentes, **caractérisé en ce que** la pulvérisation du liquide s'effectue comme pulvérisation sous pression, la pression de pulvérisation du liquide de pulvérisation dépassant de préférence 20 bars.

22. Installation de centrale électrique en vue de la mise en oeuvre du procédé selon l'une des revendications précédentes, la machine motrice à combustion comprenant un groupe (1) de turbine à gaz, l'admission d'air étant l'admission d'air du compresseur du groupe (1) de turbine à gaz, le groupe (1) de turbine à gaz comprenant au moins un compresseur (101), une chambre de combustion (102), une turbine (103), un générateur (104), un ensemble de pulvérisation (11) pour un liquide et un dispositif (40, 108, 109, 210) d'amenée de chaleur qui chauffe le liquide à pulvériser,
le dispositif (40, 108, 109, 210) d'amenée de chaleur étant un générateur de chaleur doté d'un échangeur de chaleur.

23. Installation de centrale électrique selon la revendication 22, **caractérisée en ce que** le dispositif d'amenée de chaleur est couplé thermiquement à un circuit de refroidissement d'une machine motrice thermique.

24. Installation de centrale électrique selon la revendication 22, **caractérisée en ce que** le dispositif d'amenée de chaleur est un refroidisseur (108, 109) d'air de refroidissement du groupe (1) de turbine à gaz.

25. Installation de centrale électrique selon la revendication 22, **caractérisée par** un premier parcours d'écoulement (13) qui conduit à travers le dispositif (40, 108, 109, 210) d'amenée de chaleur, un deuxième parcours d'écoulement (15) qui contourne le dispositif (40, 108, 109, 210) d'amenée de chaleur ainsi qu'un conduit (14) d'amenée de liquide de pulvérisation, les deux parcours d'écoulement débouchant dans le conduit (14) qui amène à l'ensemble (11) de pulvérisation, un organe d'étranglement ajustable (12, 16) étant disposé dans au moins l'un des parcours d'écoulement (13, 15).

26. Installation de centrale électrique selon la revendication 22, **caractérisée en ce que** le dispositif (40, 108, 109, 210) d'amenée de chaleur est un générateur (210) de vapeur de surchauffe d'un circuit d'eau et de vapeur.

27. Installation de centrale électrique selon la revendication 22, **caractérisée par** un refroidisseur (24) disposé dans le parcours d'écoulement (14) du liquide de pulvérisation, en amont de l'ensemble de pulvérisation (11).

28. Installation de centrale électrique selon l'une des revendications 22 à 27, **caractérisée en ce que** l'ensemble de pulvérisation (11) comporte des tuyères de pulvérisation sous pression.
